(19) Europäisches Patentamt
European Patent Office
Office européen des brevets

(11)  **EP 2 725 001 B1**

(12)  **EUROPEAN PATENT SPECIFICATION**

(45) Date of publication and mention
of the grant of the patent:
**02.10.2019   Bulletin 2019/40**

(51) Int Cl.:
*C05B 13/00* (2006.01)   *B09B 3/00* (2006.01)
*C02F 11/10* (2006.01)   *C05D 9/00* (2006.01)
*C05F 7/00* (2006.01)   *C05D 3/02* (2006.01)
*C05F 3/00* (2006.01)   *C05F 17/00* (2006.01)
*C02F 11/00* (2006.01)

(21) Application number: **12805013.5**

(22) Date of filing: **27.06.2012**

(86) International application number:
**PCT/JP2012/066361**

(87) International publication number:
**WO 2013/002250 (03.01.2013 Gazette 2013/01)**

(54) **PHOSPHATE FERTILIZER, AND METHOD FOR PRODUCING PHOSPHATE FERTILIZER**

PHOSPHATDÜNGER UND VERFAHREN ZUR HERSTELLUNG EINES PHOSPHATDÜNGERS

ENGRAIS PHOSPHATÉ, ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: 27.06.2011   JP 2011142029
06.07.2011   JP 2011150295
10.08.2011   JP 2011175181
15.05.2012   JP 2012111631
07.06.2012   JP 2012130012
18.06.2012   JP 2012136773

(43) Date of publication of application:
**30.04.2014   Bulletin 2014/18**

(73) Proprietor: **Taiheiyo Cement Corporation**
**Tokyo 135-8578 (JP)**

(72) Inventors:
• **IMAI Toshio**
**Sakura-shi**
**Chiba 285-8655 (JP)**
• **SAKAMOTO Yoshiaki**
**Sakura-shi**
**Chiba 285-8655 (JP)**
• **HIRABAYASHI Katsuki**
**Sakura-shi**
**Chiba 285-8655 (JP)**
• **NOMURA Koji**
**Hokuto-shi**
**Hokkaido 049-0141 (JP)**
• **MIURA Keiichi**
**Sakura-shi Chiba**
**2858655 (JP)**
• **KARIBE Hajime**
**Niigata-shi**
**Niigata 950-3101 (JP)**
• **NAKAMURA Hiroshi**
**Tokyo 174-0054 (JP)**
• **HASHIMOTO Mitsufumi**
**Saitama-shi**
**Saitama 338-0013 (JP)**
• **MINOWA Nobutaka**
**Tokyo 100-0004 (JP)**
• **IWATA Takashi**
**Tokyo 100-0004 (JP)**
• **NISHIMURA Yasumasa**
**Tokyo 174-0054 (JP)**
• **TODA Masaya**
**Tokyo 174-0054 (JP)**

(74) Representative: **Isarpatent**
**Patent- und Rechtsanwälte Behnisch Barth Charles**
**Hassa Peckmann & Partner mbB**
**Friedrichstrasse 31**
**80801 München (DE)**

(56) References cited:
EP-A1- 0 000 195       WO-A1-2010/108630
DE-A1- 2 601 676       DE-A1-102007 014 906
JP-A- 2000 169 269     JP-A- 2001 080 979
JP-A- 2005 255 485     JP-A- 2006 001 819

- **TAKASHI AKIYAMA: 'Gesui Odei no Hiryo eno Riyo' KIKAN ZASSHI 'HIRYO' 19 February 2008, pages 110 - 114, XP008171880**

**Description**

Technical Field

The present invention relates to a phosphate fertilizer obtained by firing a mixed raw material containing sewage sludge and/or a sewage sludge-derived material, and a calcium source, and to a production method for a phosphate fertilizer.

Background Art

Japan, where natural phosphorus is not produced, has heretofore imported almost all of its phosphorus. In recent years, however, in association with natural phosphorus depletion and rising phosphorus prices, Japan has had difficulty in securing its phosphorus. Under such circumstances, in the field of phosphate fertilizer production, sewage sludge incineration ash, which contains a large amount of phosphorus, has been considered as an alternative to natural phosphorus.

In addition, in Japan, sewage sludge and incineration ash thereof are generated in large amounts, i.e., 2,200,000 tons and 300, 000 tons a year, respectively, and hence treatment of the sewage sludge and the like has also been a social demand.

Therefore, a technology for utilizing sewage sludge incineration ash as a raw material for a fertilizer is extremely important as means for dealing with the problem of the depletion of the natural phosphorus resources and the social demand.

Under such circumstances, there has been proposed a phosphate fertilizer using sewage sludge incineration ash as a raw material.

For example, Patent Literature 1 proposes a fertilizer obtained by adding a predetermined amount of calcium sulfate to sewage sludge incineration ash. However, phosphorus contained in the incineration ash is present in a form that is hardly soluble in water, such as $Al(PO_3)_3$ or $SiP_2O_7$. Therefore, mere mixing of the sewage sludge incineration ash results in a low ratio of citric acid-soluble phosphate and low fertilizer efficiency.

Accordingly, there has been proposed a method of improving fertilizer efficiency.

For example, Patent Literature 2 proposes a production method for a fertilizer using incineration ash as a raw material, including the step of melting phosphorus-containing incineration ash such as sewage sludge incineration ash serving as a raw material, followed by rapid cooling to form slag.

In addition, Patent Literature 3 proposes a production method for a fertilizer, involving: heating calcium-containing waste and phosphorus component-containing sludge incineration ash in a melting furnace having a reducing atmosphere to allow a molten metal and molten slag to coexist in a state in which the two liquids are separated from each other in the melting furnace; and forming the molten slag into a granular form by water granulation treatment.

However, each of the above-mentioned methods is a melting method, and hence consumes a large amount of energy by melting and cannot perform continuous production, resulting in a problem of low production efficiency.

Citation List

Patent Literature

[PTL 1] JP 09-328385 A
[PTL 2] JP 2001-80979 A
[PTL 3] JP 2003-112988 A

WO-A-2010108630 describes a process for eliminating heavy metals from sewage sludge from industrial or municipal systems.

EP-A-0000195 describes a process for the decomposition of sludges or ashes.

DE-A-102007014906 describes a method for producing pre-product for calcium phosphate fertilizers.

DE-A-2601676 describes a method of utilizing the nutrients contained in waste products.

Summary of Invention

Technical Problem

Therefore, an object of the present invention is to provide a phosphate fertilizer that has a high ratio of citric acid-soluble phosphate and can contribute to phosphorus resource saving and energy saving in fertilizer production.

Solution to Problem

The inventors of the present invention have made intensive studies in order to achieve the object, and as a result, have found that the object can be achieved with a phosphate fertilizer obtained by firing a mixed raw material containing sewage sludge and/or a sewage sludge-derived material, and a calcium source . Thus, the inventors have completed the present invention.

That is, according to one embodiment of the present invention, there are provided a phosphate fertilizer and a production method for a phosphate fertilizer, which have the following constructions:

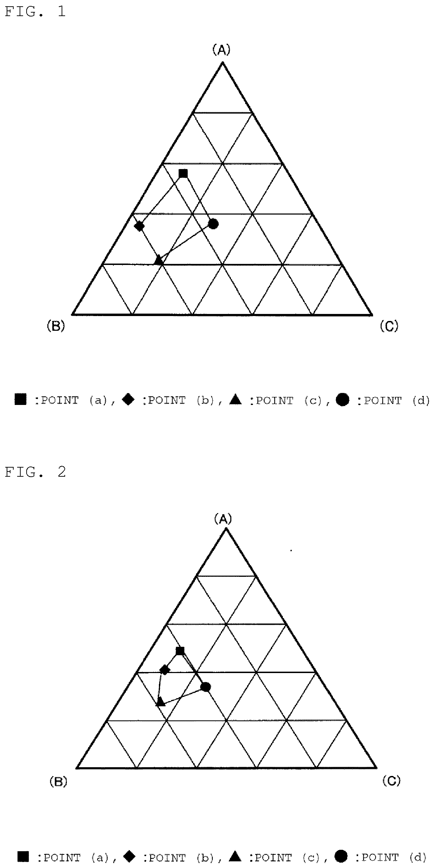

[1] A phosphate fertilizer, which is obtained by firing (at 1,150 to 1,350°C) a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

a point (a), where (A)/(B)/(C)=56/35/9;
a point (b), where (A)/(B)/(C)=35/60/5;
a point (c), where (A)/(B)/(C)=22/60/18; and
a point (d), where (A)/(B)/(C)=36/35/29,

wherein the sewage sludge-derived material comprises at least one or more kinds selected from the group consisting of: dewatered sludge; dried sludge; carbonized sludge; sewage sludge incineration ash; and sewage sludge molten slag; and the calcium source comprises at least one or more kinds selected from the group consisting of: livestock excreta; fermented livestock excreta; dried livestock excreta; carbonized livestock excreta; livestock excreta incineration ash; and livestock excreta molten slag; and the phosphate fertilizer has a content of CaO of 35 to 55 mass%, a molar ratio of Ca/P of 2.0 to 7.5, and a content of $Al_2O_3$ of 19 mass% or less.

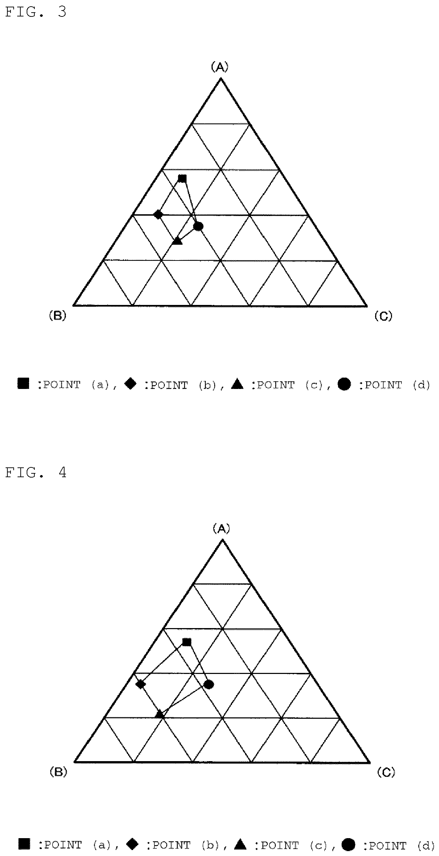

[2] A phosphate fertilizer according to the above-mentioned item [1], in which the phosphate fertilizer has a mass ratio of (A) components except for CaO and $P_2O_5$, (B) CaO, and (C) $P_2O_5$ within a range bounded by the following points in a trilinear diagram illustrated in FIG. 3:

a point (a), where (A)/(B)/(C)=56/35/9;
a point (b), where (A)/(B)/(C)=40/51/9;
a point (c), where (A)/(B)/(C)=29/50/21; and
a point (d), where (A)/(B)/(C)=35/40/25.

[3] A phosphate fertilizer, which is obtained by firing (at 1,150 to 1, 350°C) a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

a point (a), where (A)/(B)/(C)=56/35/9;
a point (b), where (A)/(B)/(C)=35/60/5;
a point (c), where (A)/(B)/(C)=22/60/18; and
a point (d), where (A)/(B)/(C)=36/35/29,

wherein the sewage sludge-derived material comprises at least one or more kinds selected from the group consisting of: dewatered sludge; dried sludge; carbonized sludge; sewage sludge incineration ash; and sewage sludge molten slag; the calcium source includes a water-washed product of livestock excreta incineration ash; and the phosphate fertilizer has a content of CaO of 35 to 60 mass%, a content of $SiO_2$ of 5 to 35 mass%, a content of $P_2O_5$ of 5 to 35 mass%, and a content of components except for CaO, $SiO_2$, and $P_2O_5$ of 30 mass% or less.

[4] A phosphate fertilizer according to above-mentioned item [1] or [3], wherein the mixed raw material further contains a silica source.

The silica source can include at least one or more kinds selected from the group consisting of: silica stone; silica sand; sand; diatomaceous earth; Shirasu (i.e. loamy soil); ready-mixed concrete sludge; waste mortar; waste concrete; acidic volcanic ash; acidic volcanic rock; and calcium silicate.

[5] A phosphate fertilizer according to the above-mentioned item [3], in which the phosphate fertilizer has a mass ratio of (A) components except for CaO and $P_2O_5$, (B) CaO, and (C) $P_2O_5$ within a range bounded by the following points in a trilinear diagram illustrated in FIG. 4:

> a point (a), where (A)/(B)/(C)=54/35/11;
> a point (b), where (A)/(B)/(C)=35/60/5;
> a point (c), where (A)/(B)/(C)=22/60/18; and
> a point (d), where (A)/(B)/(C)=35/37/28.

[6] A phosphate fertilizer, which is obtained by firing (at 1,150 to 1, 350°C) a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

> a point (a), where (A)/(B)/(C)=56/35/9;
> a point (b), where (A)/(B)/(C)=35/60/5;
> a point (c), where (A)/(B)/(C)=22/60/18; and
> a point (d), where (A)/(B)/(C)=36/35/29,

wherein the sewage sludge-derived material comprises at least one or more kinds selected from the group consisting of: dewatered sludge; dried sludge; carbonized sludge; sewage sludge incineration ash; and sewage sludge molten slag; the mixed raw material further contains a silica source; the calcium source and the silica source each include ready-mixed concrete sludge; and the phosphate fertilizer has a content of CaO of 35 to 60 mass%, a content of $SiO_2$ of 15 to 30 mass%, a content of $P_2O_5$ of 5 to 30 mass%, and a content of components except for CaO, $SiO_2$, and $P_2O_5$ of 30 mass% or less.

[7] A phosphate fertilizer according to the above-mentioned item [6], in which the ready-mixed concrete sludge has a molar ratio of $CaO/SiO_2$ in the ready-mixed concrete sludge of 0.7 to 3.0.

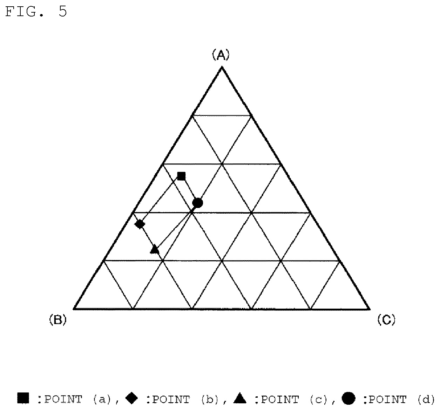

> [a] Described is a phosphate fertilizer according to the above-mentioned item [6] or [7], in which the phosphate fertilizer has a mass ratio of (A) components except for CaO and $P_2O_5$, (B) CaO, and (C) $P_2O_5$ within a range bounded by the following points in a trilinear diagram illustrated in FIG. 5:
>
> > a point (a), where (A)/(B)/(C)=55/36/9;
> > a point (b), where (A)/(B)/(C)=35/60/5;
> > a point (c), where (A)/(B)/(C)=25/60/15; and
> > a point (d), where (A)/(B)/(C)=44/36/20.

> [b] Described is a phosphate fertilizer according to any one of the above-mentioned items [1] to [7] and [a], in which a fraction of the phosphate fertilizer all of which passes through a sieve having a nominal opening size of 4 mm and which remains on a sieve having a nominal opening size of 2 mm has an average hardness of 1.0 kgf or more.

[8] A phosphate fertilizer according to any one of the above-mentioned items [1] to [7], in which the phosphate fertilizer has a ratio of citric acid-soluble phosphate of 60% or more and a ratio of hydrochloric acid-soluble silicate of 40% or more.

[9] A production method for a phosphate fertilizer of any one of the above-mentioned items [1] to [8], the method including: a mixing step of mixing sewage sludge and/or a sewage sludge-derived material with a calcium source and optionally with a silica source to obtain a mixed raw material; and a firing step of firing the mixed raw material by using a firing furnace at 1,150 to 1,350°C to obtain the phosphate fertilizer as a fired product.

[10] A production method for a phosphate fertilizer according to the above-mentioned item [9], in which the mixing step includes the step of obtaining a mixed raw material that allows the phosphate fertilizer to have a content of CaO of 35 to 60%.

[c] Described is a production method for a phosphate fertilizer according to the above-mentioned item [9] or [10], in which the firing furnace includes a rotary kiln.

[11] A production method for a phosphate fertilizer according to any one of the above-mentioned items [9] and [10], further including a granulation step of, after the mixing step and before the firing step, granulating the mixed raw material to obtain a granulated product all of which passes through a sieve having a nominal opening size of 5.6 mm and 75 mass% or more of which remain on a sieve having a nominal opening size of 2 mm.

[d] Described is a production method for a phosphate fertilizer according to any one of the above-mentioned items [9] to [11] and [c], further including a sizing step of, after the firing step, sieving the fired product to obtain a fraction all of which passes through a sieve having a nominal opening size of 4 mm and which remains on a sieve having a nominal opening size of 2 mm.

Advantageous Effects of Invention

The phosphate fertilizer of the present invention can exhibit the following effects:

(i) having a high ratio of citric acid-soluble phosphate and a high ratio of hydrochloric acid-soluble silicate;
(ii) being able to save natural phosphorus resources through recycling of sewage sludge incineration ash or the like; and
(iii) being able to recycle waste and save natural calcium sources and silica sources when using waste such as livestock excreta and ready-mixed concrete sludge for its calcium source and silica source.

In addition, the production method for a phosphate fertilizer of the present invention can exhibit the following effects:

(i) consuming less energy as compared to a melting method, consequently being able to contribute to energy saving;
(ii) allowing continuous production when using a rotary kiln as a firing furnace, resulting in high production efficiency; and
(iii) improving the yield of the phosphate fertilizer when granulating the mixed raw material before use.

Brief Description of Drawings

FIG. 1 is a trilinear diagram illustrating a mass ratio of (A) components except for CaO and $P_2O_5$, (B) CaO, and (C) $P_2O_5$ in a phosphate fertilizer.
FIG. 2 is a trilinear diagram illustrating a preferred mass ratio of the (A), (B), and (C) in the phosphate fertilizer.
FIG. 3 is a trilinear diagram illustrating a mass ratio of the (A), (B), and (C) in the phosphate fertilizer when livestock excreta and a livestock excreta-derived material are used as calcium sources.
FIG. 4 is a trilinear diagram illustrating a mass ratio of the (A), (B), and (C) in the phosphate fertilizer when a water-washed product of livestock excreta incineration ash is used as a calcium source.
FIG. 5 is a trilinear diagram illustrating a mass ratio of the (A), (B), and (C) in the phosphate fertilizer when ready-mixed concrete sludge is used as each of a calcium source and a silica source.

Description of Embodiments

As described above, according to one embodiment of the present invention, there are provided: a phosphate fertilizer obtained by firing a mixed raw material containing sewage sludge and/or a sewage sludge-derived material, and a calcium source; and a production method therefor.

The present invention is described below in separate sections for the mixed raw material for the phosphate fertilizer, the characteristics of the phosphate fertilizer, and the production method for a phosphate fertilizer, respectively. It should be noted that "%" means "mass%" unless otherwise specified.

1. Mixed raw material for phosphate fertilizer

The mixed raw material contains, as essential raw materials, sewage sludge and/or a sewage sludge-derived material (hereinafter referred to as "sewage sludge or the like"), and a calcium source, and further contains a silica source and the like as optional raw materials. In general, the sewage sludge or the like has a low calcium content, and hence a calcium source needs to be mixed to supplement the phosphate fertilizer with calcium. The firing of the sewage sludge or the like and the calcium source increases the ratio of citric acid-soluble phosphate and ratio of hydrochloric acid-soluble silicate in the resultant fired product (phosphate fertilizer).

The sewage sludge or the like and the calcium source, which are the essential raw materials in the present invention, and the silica source and the like, which are the optional raw materials therein, are described below.

(1) Sewage sludge or the like

In the present invention, the sewage sludge or the like is at least one or more kinds selected from the group consisting of sewage sludge (including human excreta sludge), dewatered sludge, dried sludge, carbonized sludge, sewage sludge incineration ash, and sewage sludge molten slag.

Of those, the sewage sludge is a muddy substance containing organic matter and inorganic matter, obtained by being separated from waste water, such as sewage or human excreta, through sedimentation, filtration, and the like during the process of treating the waste water in a sewage treatment plant or a human excreta treatment plant. The sewage sludge also encompasses digested sludge obtained by treating the muddy substance with microorganisms (digestion) under anaerobic conditions. In addition, in general, in the sewage treatment plant or the like, the waste water is first introduced into a sedimentation basin, where dirt and solid matter in the waste water are deposited to perform primary separation, is then aerated in aeration equipment, and is further introduced into a final sedimentation basin. The separation of the sewage sludge is performed through the sedimentation of sludge present in each of the sedimentation basins, followed by filtration and the like.

The dewatered sludge is sludge having a water content of about 70 to 90%, obtained by dewatering the sewage sludge through centrifugation or the like. Although the dewatered sludge is in some cases included in the sewage sludge as one kind of sewage sludge, the dewatered sludge and the sewage sludge are regarded as different things in the present invention.

The dried sludge is sludge having a water content of approximately 50% or less, obtained by drying the sewage sludge or the dewatered sludge in the sun or with a drier.

In addition, the carbonized sludge is sludge obtained by heating the sewage sludge, the dewatered sludge, or the dried sludge under low-oxygen conditions to carbonize part or all of the organic matter contained therein. A temperature during the heating is generally 200 to 800°C. The carbonized sludge serves as part of fuel in phosphate fertilizer production (firing step) as well as a raw material, and hence can save energy required for the firing correspondingly.

The sewage sludge incineration ash is a residue obtained by incinerating the dewatered sludge or the like. An example of the chemical composition (unit: %) of the incineration ash is as follows: $SiO_2$; 28, $P_2O_5$; 25, $Al_2O_3$; 15, CaO; 11, $Fe_2O_3$; 7, Cr; 0.02, Ni; 0.02, Pb; 0.009, As; 0.001, Cd; 0.001, and the like. In general, the incineration ash has a feature of containing a large amount of $SiO_2$ as compared to phosphate rock.

In addition, the sewage sludge molten slag is a residue obtained by melting sewage sludge incineration ash at 1,350°C or more.

(2) Calcium source

(i) General calcium sources

Generally calcium source can be calcium carbonate, calcium oxide, calcium hydroxide, calcium phosphate, calcium chloride, calcium sulfate, limestone, quicklime, slaked lime, cement, iron and steel slag, gypsum, ready-mixed concrete sludge (including a dried product thereof), waste mortar, waste concrete, livestock excreta, and a livestock excreta-derived material.

Calcium carbonate or limestone can be used because of its easy availability and high content of calcium.

In the present invention, the calcium source comprises at least one or more kinds selected from the group consisting of: livestock excreta; fermented livestock excreta; dried livestock excreta; carbonized livestock excreta; livestock excreta incineration ash; and livestock excreta molten slag.

(ii) Livestock excreta and livestock excreta -derived material

The livestock excreta and the livestock excreta-derived material have high contents of phosphorus and potassium as well as calcium. Accordingly, the livestock excreta and the livestock excreta-derived material are preferred because they allow the content of phosphorus in the mixed raw material to be kept high even when mixed with the sewage sludge or the like, and can add potassium serving as an important fertilizer component to the phosphate fertilizer.

In the present invention, the livestock excreta-derived material is at least one or more kinds selected from the group consisting of fermented livestock excreta, dried livestock excreta, carbonized livestock excreta, livestock excreta incineration ash, and livestock excreta molten slag.

Examples of the livestock excreta include chicken excreta and pig excreta. The fermented livestock excreta is a product obtained by naturally fermenting livestock excreta, or artificially fermenting livestock excreta with the addition of a fermentative bacteria or the like. The dried livestock excreta is a product obtained by drying livestock excreta using a drier to a water content of about 10 to 30%. The carbonized livestock excreta is a product obtained by carbonizing livestock excreta by heating at 800 to 1,100°C. The livestock excreta incineration ash is a residue obtained by incinerating livestock excreta. The chemical composition (unit: %) of chicken excreta incineration ash as an example of the livestock excreta incineration ash is as follows: CaO; 34, $K_2O$; 24, $P_2O_5$; 15, $SO_3$; 12, Cl; 5, MgO; 4, and the like. In general, the livestock excreta incineration ash has a feature of not only containing large amounts of CaO and $K_2O$ but also containing a comparable amount of $P_2O_5$ to that of sewage sludge incineration ash. Therefore, when the livestock excreta incineration ash is used as the calcium source, there is an advantage in that the fertilizer can be supplemented also with another important component thereof, i.e., potassium without a reduction in the content of phosphorus in the phosphate fertilizer. In addition, the livestock excreta molten slag is a product obtained by melting the livestock excreta incineration ash at 1,350°C or more.

(ii) Water-washed product of livestock excreta incineration ash

The livestock excreta contains large amounts of alkali metals such as potassium as described above, and these alkali metals are mainly present in the form of chlorides and sulfates. The alkali chlorides and the alkali sulfates have low melting points, and hence when the livestock excreta contains these salts in excessive amounts, coatings due to the chlorides and the like are liable to be generated in a firing furnace and in an exhaust gas duct. In addition, when the inside of the furnace or the like is clogged owing to the coatings, the production process may have to be stopped to remove the coatings, resulting in a remarkable reduction in production efficiency. In such case, the coatings can be prevented by washing the livestock excreta incineration ash with water to remove the chlorides and the like, and using the water-washed product reduced in chlorides and the like. As the calcium source, the water-washed product may be used in a water-containing state (including a slurry) as well as a dry state. Even when used in a water-containing state, the water-washed product is dried by heat in the furnace, and hence work for providing a separate drying step is eliminated, and production efficiency improves correspondingly.
The water to be used for the washing of the livestock excreta incineration ash is not particularly limited, and examples thereof include tap water, recycled water, and rainwater. In addition, as a method for the washing of the livestock excreta incineration ash, for example, there are given: a washing method involving putting livestock excreta incineration ash and water into a water tank, followed by agitation; a method involving washing the incineration ash together with sewage sludge in a sewage treatment plant; and a method involving spreading or heaping up the incineration ash outdoors and washing the incineration ash with a spray of tap water and/or rainfall.

(iii) Ready-mixed concrete sludge

The ready-mixed concrete sludge is sludge contained in: discharge water of washing in a mixer in a ready-mixed concrete plant and in an agitator truck; or discharge water in the treatment of waste fresh concrete (i.e. remained concrete or returned concrete). The ready-mixed concrete sludge contains large amounts of CaO and $SiO_2$, and hence serves as the silica source to be described later as well as the calcium source. The ready-mixed concrete sludge is generally collected by removing coarse aggregates of crushed stone from the discharge water (slurry) and then performing solid-liquid separation with a filter press or the like. However, herein, the ready-mixed concrete sludge also encompasses, for example, a fine-grained fraction obtained by crushing each of waste mortar and waste concrete to remove coarse aggregates because substantially the same components are contained therein. In the present invention, the ready-mixed concrete sludge may be used in the form of a slurry, a dewatered cake, or a dried product.
In addition, the ready-mixed concrete sludge hardens through the progress of hydration of cement clinker minerals, and hence needs to be pulverized in order to be homogeneously mixed when kneaded with the other raw material(s) after the hardening. Therefore, it is preferred that the ready-mixed concrete sludge in a slurry state before the hardening be mixed with the other raw material(s) and then the mixture be subjected to solid-liquid separation because in this case, mixing is facilitated to obviate the need for pulverization and a homogeneous mixed raw material is obtained. Besides, this mixed raw material contains water in a moderate amount and has sufficient plasticity, and hence can be easily molded into a granular form by a method such as a roll press or extrusion molding. The mixing, solid-liquid separation, and molding operations may each be performed at a separate place outside a ready-mixed concrete plant.
The ready-mixed concrete sludge has a molar ratio of $CaO/SiO_2$ in the ready-mixed concrete sludge of preferably 0.7 to 3.0, more preferably 1.2 to 2.5. The ready-mixed concrete sludge in which the value falls within this range is preferred as a component-adjusting raw material capable of supplying both CaO and $SiO_2$.

(3) Silica source and magnesium source

In general, the sewage sludge or the like contains a large amount of $SiO_2$, and hence the silica source is rarely added in ordinary cases. However, when the amount of $SiO_2$ is small, the silica source needs to be supplied.

An example of the silica source is at least one or more kinds selected from the group consisting of: silica stone; silica sand; sand; diatomaceous earth; Shirasu; ready-mixed concrete sludge; waste mortar; waste concrete; acidic volcanic ash; acidic volcanic rock; and calcium silicate. In this context, when the ready-mixed concrete sludge is used, it is suitable that the sewage sludge or the like have a high phosphorus concentration. Accordingly, the content of $P_2O_5$ in the sewage sludge or the like when the content of inorganic matter in the sewage sludge or the like, excluding organic components and crystallization water, is defined as 100% in terms of oxides is preferably 10% or more, more preferably 15% or more, still more preferably 20% or more. When the content of $P_2O_5$ is 10% or more, a larger amount of the ready-mixed concrete sludge or the like can be effectively utilized.

In addition, as the calcium silicate, there may be used, as well as an industrial product, mill ends of a calcium silicate building material or waste from the building material. In addition, as the other silica sources such as silica sand and diatomaceous earth, commercially available products may be used. In addition, sand such as used waste foundry sand may also be used as the silica source.

In addition, when the phosphate fertilizer is supplemented with a magnesium component, as a magnesium source, for example, there is given at least one or more kinds selected from the group consisting of magnesium hydroxide, magnesium oxide, magnesia, dolomite, ferronickel slag, peridotite, and serpentinite.

2. Characteristics of phosphate fertilizer

(1) Contents of CaO and the like in phosphate fertilizer

The phosphate fertilizer of the present invention has a content of CaO of 35 to 60%. When the value falls within the range, the ratio of citric acid-soluble phosphate and ratio of hydrochloric acid-soluble silicate in the phosphate fertilizer become as high as 60% or more and 40% or more, respectively. In addition, when the content of CaO is more than 60%, total phosphate in the phosphate fertilizer is relatively low, and hence the effect of application of the fertilizer may lower and the application of the fertilizer to agricultural land may increase the pH of soil to inhibit the growth of plants.

In addition, the chemical composition of the phosphate fertilizer of the present invention have, in addition to the content of CaO (35 to 60%), a content of $SiO_2$ of 5 to 35%, a content of $P_2O_5$ of 5 to 35%, and a content of components except for CaO, $SiO_2$, and $P_2O_5$ of 30% or less. When the contents of $SiO_2$, $P_2O_5$, and the like fall within the ranges, there can be produced a fertilizer that is excellent in ability to supply silicate and phosphate.

In this context, examples of the components except for CaO, $SiO_2$, and $P_2O_5$ include $Al_2O_3$, MgO, $Fe_2O_3$, $Na_2O$, and $K_2O$. In addition, the content of the components except for CaO and the like is given by the following equation. The same applies hereinafter.

$$\text{Content of components except for CaO and the like (\%) = 100}$$
$$\text{− Content of CaO (\%) − Content of } SiO_2 \text{ (\%) − Content of } P_2O_5 \text{ (\%)}$$

Further, the content of CaO has a lower limit of more preferably 38%, still more preferably 42%, and has an upper limit of more preferably 55%, still more preferably 48%. In addition, the content of $SiO_2$ has a lower limit of more preferably 7%, still more preferably 8%, and has an upper limit of more preferably 30%, still more preferably 20%. In addition, the content of $P_2O_5$ has a lower limit of more preferably 9%, still more preferably 12%, and has an upper limit of more preferably 30%, still more preferably 25%.

It should be noted that the ratio of citric acid-soluble phosphate refers to a mass ratio (%) of citric acid-soluble phosphate to total phosphate in the phosphate fertilizer, and the ratio of hydrochloric acid-soluble silicate refers to a mass ratio (%) of hydrochloric acid-soluble silicate to total silicate in the phosphate fertilizer. The amount of citric acid-soluble phosphate can be measured by the ammonium vanadomolybdate method specified in Fertilizer Analysis Methods (methods of the National Institute for Agro-Environmental Sciences, Ministry of Agriculture, Forestry and Fisheries), and the amount of hydrochloric acid-soluble silicate can be measured by the perchloric acid method specified in the Methods. It should be noted that oxides in the raw materials and the phosphate fertilizer can be quantified by a fundamental parameter method with the use of an X-ray fluorescence apparatus.

(2) Range of phosphate fertilizer on trilinear diagram

When represented on a trilinear diagram, the phosphate fertilizer of the present invention has a mass ratio of (A) components except for CaO and $P_2O_5$, (B) CaO, and (C) $P_2O_5$ within a range bounded by the following points in a trilinear diagram illustrated in FIG. 1:

a point (a), where (A)/(B)/(C)=56/35/9;
a point (b), where (A)/(B)/(C)=35/60/5;
a point (c), where (A)/(B)/(C)=22/60/18; and
a point (d), where (A)/(B)/(C)=36/35/29. When the mass ratio falls within the range, the ratio of citric acid-soluble phosphate and the ratio of hydrochloric acid-soluble silicate become higher.

It should be noted that the sum of the (A), (B), and (C) is 100, and values on the boundary are also included "within a range bounded." In addition, examples of the components except for CaO and $P_2O_5$ include $SiO_2$, $Al_2O_3$, MgO, $Fe_2O_3$, $Na_2O$, and $K_2O$. In addition, the content of the components except for CaO and the like is given by the following equation. The same applies hereinafter.

$$\text{Content of components except for CaO and the like (\%) = 100}$$

$$\text{- Content of CaO (\%) - Content of } P_2O_5 \text{ (\%)}$$

In addition, the phosphate fertilizer of the present invention preferably has a mass ratio of (A) components except for CaO and $P_2O_5$, (B) CaO, and (C) $P_2O_5$ within a range bounded by the following points in a trilinear diagram illustrated in FIG. 2:

a point (a), where (A)/(B)/(C)=49/41/10
a point (b), where (A)/(B)/(C)=41/50/9;
a point (c), where (A)/(B)/(C)=28/58/14; and
a point (d), where (A)/(B)/(C)=34/40/26. When the mass ratio falls within the range, the ratio of citric acid-soluble phosphate and the ratio of hydrochloric acid-soluble silicate become even higher.

(3) Molar ratio of $SiO_2/Al_2O_3$ in phosphate fertilizer, and the like

The phosphate fertilizer preferably has a molar ratio of $SiO_2/Al_2O_3$ of 2.5 or more. When the molar ratio is 2.5 or more, firing becomes easier. In addition, in the phosphate fertilizer of the present invention, it is preferred that the mass ratio of the (A), (B), and (C) fall within the above-mentioned range and the mass ratio of $CaO/P_2O_5$ in the phosphate fertilizer be 2.3 or less or 4.0 or more. When the mass ratios falls within these ranges, the citric acid solubility of phosphate and the like are even higher.

(4) Chemical composition of phosphate fertilizer in which calcium source is livestock excreta and livestock excreta -derived material

When the calcium source is at least one or more kinds selected from the group consisting of: livestock excreta; fermented livestock excreta; dried livestock excreta; carbonized livestock excreta; livestock excreta incineration ash; and livestock excreta molten slag, the phosphate fertilizer preferably has a content of CaO of 35 to 55%, a molar ratio of Ca/P of 2.0 to 7.5, and a content of $Al_2O_3$ of 19% or less. When the respective values fall within the ranges, the ratio of citric acid-soluble phosphate and ratio of hydrochloric acid-soluble silicate in the phosphate fertilizer become as high as 60% or more and 40% or more, respectively.

Further, the content of CaO has a lower limit of more preferably 38%, still more preferably 40%, and has an upper limit of more preferably 52%, still more preferably 50%. In addition, the molar ratio of Ca/P has a lower limit of more preferably 2.5, still more preferably 3.0, and has an upper limit of more preferably 6.0, still more preferably 5.0. In addition, the content of $Al_2O_3$ is more preferably 17% or less, still more preferably 15% or less.

When represented on a trilinear diagram, the phosphate fertilizer in which the calcium source is livestock excreta and a livestock excreta-derived material more preferably has a mass ratio of (A) components except for CaO and $P_2O_5$, (B) CaO, and (C) $P_2O_5$ within a range bounded by the following points in a trilinear diagram illustrated in FIG. 3:

a point (a), where (A)/(B)/(C)=56/35/9;
a point (b), where (A)/(B)/(C)=40/51/9;
a point (c), where (A)/(B)/(C)=29/50/21; and
a point (d), where (A) / (B) / (C)=35/40/25. When the mass ratio falls within the range, the ratio of citric acid-soluble phosphate and the ratio of hydrochloric acid-soluble silicate become higher.

In addition, the phosphate fertilizer still more preferably has a molar ratio of $SiO_2/Al_2O_3$ of 2.5 or more. When the molar ratio is 2.5 or more, firing becomes easier.

(4) Chemical composition of phosphate fertilizer in which calcium source is water-washed product of livestock excreta incineration ash

When the calcium source is a water-washed product of livestock excreta incineration ash, the phosphate fertilizer preferably has a content of CaO of 35 to 60%, a content of $SiO_2$ of 5 to 35%, a content of $P_2O_5$ of 5 to 35%, and a content of components except for CaO, $SiO_2$, and $P_2O_5$ of 30% or less. When the content of CaO in the phosphate fertilizer falls within the range, the fertilizer can be produced as a phosphate fertilizer having a ratio of citric acid-soluble phosphate of 60% or more and a ratio of hydrochloric acid-soluble silicate of 40% or more. In addition, when the contents of $SiO_2$ and $P_2O_5$ fall within the ranges, there can be produced a fertilizer that is excellent in ability to supply silicate and phosphate.

Further, the lower limit of the content of CaO is more preferably 38%, still more preferably 42%, and the upper limit thereof is more preferably 55%, still more preferably 48%. In addition, the lower limit of the content of $SiO_2$ is more preferably 7%, still more preferably 8%, and the upper limit thereof is more preferably 30%, still more preferably 20%. In addition, the lower limit of the content of $P_2O_5$ is more preferably 9%, still more preferably 12%, and the upper limit thereof is more preferably 30%, still more preferably 25%.

When represented on a trilinear diagram, the phosphate fertilizer in which the calcium source is a water-washed product of livestock excreta incineration ash more preferably has a mass ratio of (A) components except for CaO and $P_2O_5$, (B) CaO, and (C) $P_2O_5$ in the phosphate fertilizer within a range bounded by the following points in a trilinear diagram illustrated in FIG. 4:

a point (a), where (A)/(B)/(C)=54/35/11;
a point (b), where (A)/(B)/(C)=35/60/5;
a point (c), where (A)/(B)/(C)=22/60/18; and
a point (d), where (A) / (B) / (C)=35/37/28. When the mass ratio falls within the range, the ratio of citric acid-soluble phosphate and the ratio of hydrochloric acid-soluble silicate become higher.

In addition, the phosphate fertilizer still more preferably has a molar ratio of $SiO_2/Al_2O_3$ of 2.5 or more. When the molar ratio is 2.5 or more, firing becomes easier.

(5) Chemical composition of phosphate fertilizer in which calcium source and silica source are each ready-mixed concrete sludge

When the calcium source and the silica source are each ready-mixed concrete sludge, the phosphate fertilizer preferably has a content of CaO of 35 to 60%, a content of $SiO_2$ of 15 to 30%, a content of $P_2O_5$ of 5 to 30 mass%, and a content of components except for CaO, $SiO_2$, and $P_2O_5$ of 30% or less. When the contents fall within the ranges, the ratio of citric acid-soluble phosphate and ratio of hydrochloric acid-soluble silicate in the fertilizer are 60% or more and 40% or more, respectively. In addition, when the contents of $SiO_2$ and $P_2O_5$ fall within the ranges, there can be produced a fertilizer that is excellent in ability to supply silicate and phosphate.

Further, the lower limit of the content of CaO is more preferably 40%, still more preferably 42%, and the upper limit thereof is more preferably 55%, still more preferably 50%. In addition, the lower limit of the content of $SiO_2$ is more preferably 17%, still more preferably 20%, and the upper limit thereof is more preferably 28%, still more preferably 25%. In addition, the lower limit of the content of $P_2O_5$ is more preferably 9%, still more preferably 12%, and the upper limit thereof is more preferably 27%, still more preferably 25%.

When represented on a trilinear diagram, the phosphate fertilizer in which the calcium source and the silica source are each ready-mixed concrete sludge more preferably has a mass ratio of (A) components except for CaO and $P_2O_5$, (B) CaO, and (C) $P_2O_5$ within a range bounded by the following points in a trilinear diagram illustrated in FIG. 5:

a point (a), where (A)/(B)/(C)=55/36/9;
a point (b), where (A)/(B)/(C)=35/60/5;
a point (c), where (A)/(B)/(C)=25/60/15; and
a point (d), where (A) / (B) / (C)=44/36/20. When the mass ratio falls within the range, the ratio of citric acid-soluble phosphate and the ratio of hydrochloric acid-soluble silicate become higher.

In addition, the phosphate fertilizer still more preferably has a molar ratio of $SiO_2/Al_2O_3$ of 2.5 or more. When the molar ratio is 2.5 or more, firing becomes easier.

(6) Average hardness of phosphate fertilizer

A fraction of the phosphate fertilizer all of which passes through a sieve having a nominal opening size of 4 mm and which remains on a sieve having a nominal opening size of 2 mm has an average hardness (crushing strength) of preferably 1.0 kgf or more. When the value is 1.0 kgf or more, the generation of dust by the disintegration of the fired product is suppressed. Accordingly, the yield of the fertilizer improves, the fertilizer becomes easier to handle, and the fertilizer effect is enhanced.

It should be noted that the average hardness of the fired product can be determined by, for example, randomly selecting five pieces of the fired product, measuring their hardnesses using a Kiya hardness tester, and calculating their average.

3. Production method for phosphate fertilizer

As described above, the production method of the present invention includes a mixing step and a firing step as essential steps, and further includes a granulation step and a sizing step as optional steps.

The production method is described below in separate sections for the mixing step, the firing step, the granulation step, and the sizing step, respectively.

(1) Mixing step

This step is the step of mixing sewage sludge or the like with a calcium source and optionally with a silica source to obtain a mixed raw material. In addition, this step also encompasses the step of obtaining a mixed raw material that allows the phosphate fertilizer to have a content of CaO of 35 to 60%. As required, the sewage sludge or the like, the calcium source, and the silica source are pulverized with a ball mill, a roller mill, a rod mill, or the like so as to have a particle size that facilitates the mixing.

A method for the mixing of the raw materials may involve mixing the respective raw materials using a general mixing apparatus or a ball mill, roller mill, rod mill, or the like for also performing pulverization. In addition, in the case of using a rotary kiln as a firing furnace, the method may involve loading the respective raw materials at a site anterior to the rotary kiln (such as a kiln inlet or a precalciner), and mixing the raw materials through the utilization of the rotary motion of the rotary kiln. In addition, the raw materials may be mixed in a powder or slurry state.

In addition, as a method of blending the respective raw materials, for example, there is given a method involving: firing part of each of the raw materials with an electric furnace or the like; then quantifying oxides in the fired ash; and mixing the respective raw materials on the basis of the quantified values and predetermined formulation. The quantification of the oxides can be performed by a fundamental parameter method using an X-ray fluorescence apparatus. The chemical composition of the mixed raw material before firing is the same as the chemical composition of the phosphate fertilizer after firing in many cases. Accordingly, in order to obtain a phosphate fertilizer in which the contents of CaO and the like fall within the above-mentioned ranges, it generally suffices to use a mixed raw material in which the contents of CaO and the like satisfy the ranges. In this regard, however, for the purpose of accuracy, it is preferred that part of the raw materials be fired with an electric furnace or the like to grasp in advance correlations between the contents of CaO and the like in the raw material and those in the fired product, and on the basis of the correlations, the mixing ratio of the raw materials be modified so as to achieve the target contents of CaO and the like in the phosphate fertilizer.

It should be noted that, by adding other fertilizer components such as potassium to the mixed raw material depending on the application of the fertilizer, it is possible to produce many kinds of fertilizers on the basis of the phosphate fertilizer of the present invention.

(2) Firing step

This step is the step of firing the mixed raw material (including a granulated product to be described later) by using a firing furnace at 1,150 to 1,350°C to obtain the phosphate fertilizer as a fired product. The phosphate fertilizer fired in the temperature range is high in ratio of citric acid-soluble phosphate, ratio of hydrochloric acid-soluble silicate, and the like. The firing temperature is preferably 1,200 to 1,300°C.

In addition, a firing time is preferably 10 to 90 minutes, more preferably 20 to 60 minutes. When the time is less than 10 minutes, the firing is insufficient, whereas when the time is more than 90 minutes, production efficiency lowers.

Examples of the firing furnace include a rotary kiln and an electric furnace. Of those, a rotary kiln is preferred because the rotary kiln is suitable for continuous production.

In addition, when the mixed raw material contains a large amount of a heavy metal, it is preferred that, in the firing step, at least one or more kinds of heavy metal removal methods selected from the group consisting of a high-temperature volatilization method, a chlorination-volatilization method, a chlorine bypass method, and a reduction firing method be used in combination.

In this context, the high-temperature volatilization method is a removal method involving volatilizing a heavy metal having a low boiling point contained in the mixed raw material through firing at high temperature.

The chlorination-volatilization method is a removal method involving volatilizing a heavy metal such as lead or zinc contained in the mixed raw material in the form of chlorides having low boiling points. Specifically, this method is a removal method involving additionally mixing a chlorine source such as calcium chloride in the preparation of the mixed raw material, firing the mixed raw material with a firing furnace, and volatilizing the generated chloride of the heavy metal. It should be noted that, when the raw materials themselves contain sufficient chlorine for volatilizing the heavy metal, the chlorine source does not have to be mixed.

The chlorine bypass method is a method involving utilizing the following properties of a chlorine source and alkali source contained in the mixed raw material: the chlorine source and the alkali source volatilize and condense in a high-temperature firing furnace. Specifically, this method is a removal method involving extracting part of combustion gas that contains chlorine in the mixed raw material in a volatilized state from the exhaust gas flow path in the firing furnace to cool the part of the combustion gas, and separating dust containing chlorine and a heavy metal to be generated. When the amount of the chlorine source or the alkali source is excessive or insufficient, a chlorine source or an alkali source may be added from outside to adjust the amount.

The reduction firing method is a removal method involving reducing a heavy metal in the mixed raw material to volatilize the heavy metal in the form of metals having low boiling points. Specifically, this method is a removal method involving firing the mixed raw material containing a heavy metal under a reducing atmosphere and/or with the addition of a reducing agent through the use of a firing furnace to reduce the heavy metal, and volatilizing the reduced heavy metal. It should be noted that the inside of a granulated product to be described later has lost ventilation to the outside to have a reducing atmosphere, and hence the heavy metal may be volatilized even when the firing is performed under a state in which oxygen is present. In addition, the inside of the granulated product may naturally achieve a reduced state through the consumption of oxygen by the combustion of organic matter contained in the sewage sludge or the like, and the volatilization of the heavy metal may be thus promoted.

(3) Granulation step

This step is the step of, after the mixing step and before the firing step, granulating (including molding as well) the mixed raw material to obtain a granulated product all of which passes through a sieve having a nominal opening size of 5.6 mm and 75% or more of which remain on a sieve having a nominal opening size of 2 mm, and is an optional step in the present invention.

The firing of the granulated product improves the quality of the fertilizer and also stabilizes the firing step, as compared to the firing of powder, so that energy efficiency and production efficiency in fertilizer production can be enhanced.

In addition, as a granulation apparatus, for example, there are given a pan type pelletizer, a pan type mixer, an agitation granulator, a briquette machine, a roll press, and an extrusion molding machine. In particular, a pan type pelletizer is suitable because of its excellent convenience and production efficiency.

It should be noted that the granulated product as referred to herein is not limited to a spherical product, and also encompasses an amorphous granular product. In addition, the sieves to be used in the granulation step described above and the sizing step to be described later are sieves specified in JIS Z 8801-1 (2006): "Opening size and wire diameter of sieve meshes."

The mixed raw material has a water content of preferably 10 to 50%, more preferably 10 to 40%, still more preferably 20 to 30% in terms of inner percentage. When the value falls within the range, plasticity sufficient for the granulation is obtained, and the generation of a lump in the granulation apparatus by adhesion or aggregation can be suppressed.

The water content may be adjusted by adding water after the drying and blending of the raw materials, or may be adjusted by blending water-containing raw materials, followed by drying.

The granulated product has an absolute dry density (average of values obtained by dividing the mass of each individual granulated product in an absolute dry state by the volume of the granulated product) of preferably 1.15 $g/cm^3$ or more, more preferably 1.2 $g/cm^3$ or more, still more preferably 1.3 $g/cm^3$ or more. When the value is 1.15 $g/cm^3$ or more, there can be obtained a phosphate fertilizer that has a high ratio of citric acid-soluble phosphate and a high ratio of hydrochloric acid-soluble silicate.

It should be noted that, in order to enhance granulation property (i.e. moldability), a additive (i.e. addition material) such as bentonite, cement, a solidification material, or a binder may be added to the mixed raw material before the granulation.

(4) Sizing step

This step is the step of, after the firing step, sieving the fired product to obtain a fraction all of which passes through a sieve having a nominal opening size of 4 mm and which remains on a sieve having a nominal opening size of 2 mm. This step is an optional step to be selected when the particle size of the fertilizer needs to be adjusted in order to make it easier to handle the fertilizer by suppressing the generation of dust when the fertilizer is applied to farmland or in order to allow a fertilizer effect to be sufficiently exhibited.

In addition, in this step, as appropriate depending on the application of the fertilizer, an additional component of silicate or phosphate may be added, or other fertilizer components such as nitrogen, potassium, and magnesium may be newly added.

Examples

Hereinafter, the present invention is specifically described by way of Examples, but the present invention is not limited to Examples below.

1. Examples 1 to 53, Comparative Examples 1 to 11, and Reference Example

(1) Production of phosphate fertilizer with electric furnace (Examples 1 to 30, Comparative Examples 1 to 6, and Reference Example)

Sewage sludge incineration ash (a1, a2) having chemical composition shown in Table 1, and an industrial reagent of tricalcium phosphate (c1) and calcium carbonate having a purity of 99% (c2) as calcium sources were used, and weighed in accordance with formulations of Examples 1 to 30 and Comparative Examples 1 to 6 shown in Table 2. After that, 10 g of the raw materials and 300 g of zirconia balls each having a diameter of 10.7 mm were loaded into a small mill made of a resin having an inner diameter of 80 mm and a length of 100 mm and were mixed for 5 minutes to prepare mixed raw materials.

Next, the mixed raw materials were used and molded with a uniaxial pressing machine to prepare columnar mixed raw materials each having a diameter of 15 mm and a height of 20 mm.

Further, the columnar mixed raw materials were placed in an electric furnace, then the temperature was increased at a rate of temperature increase of 20°C/min to temperatures shown in Table 2, and the columnar mixed raw materials were fired under the temperatures for 10 minutes to obtain fired products. Further, the fired products were pulverized using a mortar made of iron until all passed through a sieve having an opening size of 212 $\mu$m to produce powdery phosphate fertilizers (Examples 1 to 30 and Comparative Examples 1 to 6). In addition, as Reference Example, a phosphate fertilizer was produced by the same method as above using only the sewage sludge incineration ash (a1) as its raw material. Table 2 shows the chemical composition of each of the phosphate fertilizers .

(2) Production of phosphate fertilizer with rotary kiln (Examples 31 to 53 and Comparative Examples 7 to 11)

Sewage sludge incineration ash (a1 to 8) having chemical composition shown in Table 1 and limestone powder (c3) as a calcium source were used, and weighed in accordance with formulations of Examples 31 to 53 and Comparative Examples 7 to 11 shown in Table 2 and Table 3. After that, mixed raw materials were prepared using a batch type mixing machine (High Speeder model SM-150, manufactured by Pacific Machinery & Engineering Co., Ltd.).

Next, the mixed raw materials were used and molded with a roll press machine in a dry system to prepare flaky mixed raw materials.

Further, the mixed raw materials were fired using a rotary kiln having an inner diameter of 450 mm and a length of 8,340 mm at temperatures shown in Table 2 and Table 3 for a mean residence time in the kiln of 40 minutes to obtain fired products.

Further, the fired products were pulverized using a mortar made of iron until all passed through a sieve having an opening size of 212 $\mu$m to produce powdery phosphate fertilizers (Examples 31 to 53 and Comparative Examples 7 to 11). Table 2 and Table 3 show the chemical composition of each of the phosphate fertilizers.

(3) Measurement of citric acid-soluble phosphate and hydrochloric acid-soluble silicate, and the like.

The amounts of citric acid-soluble phosphate and hydrochloric acid-soluble silicate in each of the phosphate fertilizers were measured by the ammonium vanadomolybdate method specified in Fertilizer Analysis Methods (methods of the National Institute for Agro-Environmental Sciences, Ministry of Agriculture, Forestry and Fisheries) and the perchloric acid method specified in the Methods, respectively. In addition, the ratio of citric acid-soluble phosphate and the ratio of hydrochloric acid-soluble silicate were calculated on the basis of the measured values. Table 2 and Table 3 show the results.

It should be noted that the following items are common among Examples and Comparative Examples of the present invention.

(i) The chemical composition in the raw materials and the fired product was measured by an X-ray fluorescence fundamental parameter method.

(ii) A, B, and C in the mass ratio of oxides in each table represent components except for CaO and $P_2O_5$, CaO, and $P_2O_5$, respectively.

(iii) The chemical composition of the phosphate fertilizer after firing was almost the same as the chemical composition of the mixed raw material before firing except for components volatilized by firing.

(iv) The contents of CaO, $P_2O_5$, and $SiO_2$ in each table are the contents of the respective oxides in the mixed raw material and the phosphate fertilizer (fired product).

[Table 1]

|  | $SiO_2$ (%) | $Al_2O_3$ (%) | CaO (%) | $P_2O_5$ (%) |
|---|---|---|---|---|
| a1 | 36.0 | 23.0 | 7.6 | 15.6 |
| a2 | 20.4 | 12.0 | 10.8 | 38.9 |
| a3 | 32.7 | 20.6 | 8.6 | 22.0 |
| a4 | 26.0 | 15.9 | 9.8 | 31.2 |
| a5 | 31.1 | 18.4 | 6.6 | 20.6 |
| a6 | 25.0 | 12.2 | 12.6 | 25.5 |
| a7 | 22.0 | 20.2 | 7.2 | 27.6 |
| a8 | 19.8 | 11.2 | 12.3 | 33.9 |
| Note) Chemical composition of main components is shown. | | | | |

[Table 2]

| | Sewage sludge incineration ash (%) | | | | Calcium source (%) | | | CaO content (%) | $P_2O_5$ content (%) | $SiO_2$ content (%) | Firing temperature (°C) | Oxide mass ratio in fired product | | | $SiO_2/Al_2O_3$ (Molar ratio) | Citric acid-soluble phosphate (%) | Ratio of citric acid-soluble phosphate (%) | Hydrochloricacid-soluble silicate (%) | Ratio of hydrochloric acid-soluble silicate (%) |
| | a1 | a2 | a3 | a4 | c1 | c2 | c3 | | | | | A | B | C | | | | | |
|---|---|---|---|---|---|---|---|---|---|---|---|---|---|---|---|---|---|---|---|
| Example 1 | 51 | - | - | - | - | 49 | - | 40.6 | 10.3 | 23.8 | 1,250 | 49 | 41 | 10 | 2.7 | 8.7 | 84 | 20.8 | 87 |
| Example 2 | 51 | - | - | - | - | 49 | - | 40.6 | 10.3 | 23.8 | 1,300 | 49 | 41 | 10 | 2.7 | 9.0 | 87 | 21.0 | 88 |
| Example 3 | 40 | - | - | - | - | 60 | - | 50.5 | 8.6 | 19.9 | 1,300 | 41 | 50 | 9 | 2.7 | 7.6 | 88 | 19.9 | 100 |
| Example 4 | 40 | - | - | - | - | 60 | - | 50.5 | 8.6 | 19.9 | 1,350 | 41 | 50 | 9 | 2.7 | 8.5 | 99 | 19.9 | 100 |
| Example 5 | 42 | - | - | - | 15 | 43 | - | 47.6 | 15.1 | 18.3 | 1,300 | 37 | 48 | 15 | 3.1 | 14.2 | 94 | 18.1 | 99 |
| Example 6 | 46 | - | - | - | 19 | 35 | - | 40.0 | 17.0 | 20.0 | 1,150 | 43 | 40 | 17 | 2.7 | 13.6 | 80 | 19.7 | 99 |
| Example 7 | 46 | - | - | - | 19 | 35 | - | 40.0 | 17.0 | 20.0 | 1,200 | 43 | 40 | 17 | 2.7 | 14.1 | 83 | 20.0 | 100 |
| Example 8 | 46 | - | - | - | 19 | 35 | - | 40.0 | 17.0 | 20.0 | 1,250 | 43 | 40 | 17 | 2.7 | 12.3 | 72 | 19.8 | 99 |
| Example 9 | 34 | - | - | - | 22 | 44 | - | 50.0 | 17.0 | 14.7 | 1,200 | 33 | 50 | 17 | 2.7 | 13.3 | 78 | 14.7 | 100 |
| Example 10 | 34 | - | - | - | 22 | 44 | - | 50.0 | 17.0 | 15.0 | 1,250 | 33 | 50 | 17 | 2.7 | 14.7 | 86 | 15.0 | 100 |
| Example 11 | 34 | - | - | - | 22 | 44 | - | 50.0 | 17.0 | 15.0 | 1,300 | 33 | 50 | 17 | 2.7 | 16.6 | 98 | 15.0 | 100 |
| Example 12 | 34 | - | - | - | 22 | 44 | - | 50.0 | 17.0 | 15.0 | 1,350 | 33 | 50 | 17 | 2.7 | 17.0 | 100 | 15.0 | 100 |
| Example 13 | - | 55 | - | - | - | 45 | - | 40.0 | 26.2 | 13.7 | 1,150 | 34 | 40 | 26 | 2.9 | 16.2 | 62 | 10.7 | 78 |
| Example 14 | | 55 | - | - | - | 45 | - | 40.0 | 26.2 | 13.7 | 1,200 | 34 | 40 | 26 | 2.9 | 17.0 | 65 | 10.6 | 77 |
| Example 15 | - | 55 | - | - | - | 45 | - | 40.0 | 26.2 | 13.7 | 1,250 | 34 | 40 | 26 | 2.9 | 16.6 | 63 | 11.3 | 82 |
| Example 16 | - | 55 | - | - | - | 45 | - | 40.0 | 26.2 | 13.7 | 1,300 | 34 | 40 | 26 | 2.9 | 15.8 | 60 | 11.7 | 85 |
| Example 17 | - | 44 | - | - | - | 56 | - | 50.0 | 21.8 | 11.5 | 1,200 | 28 | 50 | 22 | 2.9 | 17.7 | 81 | 10.9 | 95 |
| Example 18 | - | 44 | - | - | - | 56 | - | 50.0 | 21.8 | 11.5 | 1,250 | 28 | 50 | 22 | 2.9 | 16.3 | 75 | 9.5 | 83 |
| Example 19 | - | 44 | - | - | - | 56 | - | 50.0 | 21.8 | 11.5 | 1,300 | 28 | 50 | 22 | 2.9 | 19.6 | 90 | 11.5 | 100 |
| Example 20 | - | 44 | - | - | - | 56 | - | 50.0 | 21.8 | 11.5 | 1,350 | 28 | 50 | 22 | 2.9 | 20.9 | 96 | 11.5 | 100 |
| Example 21 | 20 | 34 | - | - | - | 46 | - | 40.0 | 19.9 | 17.8 | 1,200 | 40 | 40 | 20 | 2.8 | 15.1 | 76 | 12.5 | 70 |
| Example 22 | 20 | 34 | - | - | - | 46 | - | 40.0 | 19.9 | 17.8 | 1,250 | 40 | 40 | 20 | 2.8 | 14.1 | 71 | 13.7 | 77 |

| | Sewage sludge incineration ash (%) | | | | Calcium source (%) | | | CaO content (%) | P₂O₅ content (%) | SiO₂ content (%) | Firing temperature (°C) | Oxide mass ratio in fired product | | | SiO₂/Al₂O₃ (Molar ratio) | Citric acid-soluble phosphate (%) | Ratio of citric acid-soluble phosphate (%) | Hydrochloric acid-soluble silicate (%) | Ratio of hydrochloric acid-soluble silicate (%) |
|---|---|---|---|---|---|---|---|---|---|---|---|---|---|---|---|---|---|---|---|
| | a1 | a2 | a3 | a4 | c1 | c2 | c3 | | | | | A | B | C | | | | | |
| Example 23 | 20 | 34 | - | - | - | 46 | - | 40.0 | 19.9 | 17.8 | 1,300 | 40 | 40 | 20 | 2.8 | 14.5 | 73 | 14.1 | 79 |
| Example 24 | 13 | 36 | - | - | - | 51 | - | 44.9 | 20.0 | 15.3 | 1,200 | 35 | 45 | 20 | 2.8 | 17.2 | 86 | 15.3 | 100 |
| Example 25 | 13 | 36 | - | - | - | 51 | - | 44.9 | 20.0 | 15.3 | 1,250 | 35 | 45 | 20 | 2.8 | 17.8 | 89 | 15.3 | 100 |
| Example 26 | 13 | 36 | - | - | - | 51 | - | 44.9 | 20.0 | 15.3 | 1,300 | 35 | 45 | 20 | 2.8 | 18.8 | 94 | 15.3 | 100 |
| Example 27 | 5 | 38 | - | - | - | 57 | - | 50.4 | 19.9 | 12.5 | 1,200 | 30 | 50 | 20 | 2.8 | 15.7 | 79 | 12.5 | 100 |
| Example 28 | 5 | 38 | - | - | - | 57 | - | 50.4 | 19.9 | 12.5 | 1,250 | 30 | 50 | 20 | 2.8 | 16.7 | 84 | 12.5 | 100 |
| Example 29 | 5 | 38 | - | - | - | 57 | - | 50.4 | 19.9 | 12.5 | 1,300 | 30 | 50 | 20 | 2.8 | 18.0 | 90 | 12.5 | 100 |
| Example 30 | 5 | 38 | - | - | - | 57 | - | 50.4 | 19.9 | 12.5 | 1,350 | 30 | 50 | 20 | 2.8 | 19.4 | 97 | 12.5 | 100 |
| Example 31 | - | - | 44 | - | - | - | 56 | 47.8 | 11.2 | 18.1 | 1,300 | 41 | 48 | 11 | 3.1 | 11.2 | 100 | 18.1 | 100 |
| Example 32 | - | - | - | 45 | - | - | 55 | 47.3 | 16.5 | 14.7 | 1,300 | 36 | 47 | 17 | 3.3 | 16.5 | 100 | 14.7 | 100 |
| Comparative Example 1 | 61 | - | - | - | 15 | 24 | - | 30.0 | 17.0 | 24.4 | 1,200 | 53 | 30 | 17 | 2.7 | 12.8 | 75 | 5.2 | 21 |
| Comparative Example 2 | 61 | - | - | - | 15 | 24 | - | 30.0 | 17.0 | 24.4 | 1,250 | 53 | 30 | 17 | 2.7 | 11.9 | 70 | 5.7 | 23 |
| Comparative Example 3 | 59 | - | - | - | 41 | - | - | 29.1 | 25.0 | 20.9 | 1,200 | 46 | 29 | 25 | 2.7 | 11.5 | 46 | 2.1 | 10 |
| Comparative Example 4 | 59 | - | - | - | 41 | - | - | 29.1 | 25.0 | 20.9 | 1,250 | 46 | 29 | 25 | 2.7 | 11.1 | 44 | 2.4 | 11 |
| Comparative Example 5 | - | 69 | - | - | - | 31 | - | 30.0 | 30.5 | 16.0 | 1,150 | 39 | 30 | 31 | 2.9 | 16.8 | 55 | 1.2 | 8 |
| Comparative Example 6 | - | 69 | - | - | - | 31 | - | 30.0 | 30.5 | 16.0 | 1,200 | 39 | 30 | 31 | 2.9 | 15.7 | 51 | 1.5 | 9 |
| Reference Example | 100 | - | - | - | - | - | - | - | - | - | 1,250 | 77 | 7 | 16 | 2.7 | 8.1 | 52 | 5.6 | 16 |

[Table 3]

| | Sewage sludge incineration ash (%) | | | | | | Calcium source (%) | CaO content (%) | $P_2O_5$ content (%) | $SiO_2$ content (%) | Firing temperature (°C) | Oxide mass ratio in fired product | | | $SiO_2/Al_2O_3$ (Molar ratio) | Citric acid-soluble phosphate (%) | Ratio of citric acid-soluble phosphate (%) | Hydrochloric acid-soluble silicate (%) | Ratio of hydrochloric acid-soluble silicate (%) |
|---|---|---|---|---|---|---|---|---|---|---|---|---|---|---|---|---|---|---|---|
| | a1 | a2 | a5 | a6 | a7 | a8 | c3 | | | | | A | B | C | | | | | |
| Example 33 | 54 | | | | | | 46 | 36.0 | 9.9 | 23.0 | 1,150 | 54 | 36 | 10 | 2.7 | 6.1 | 61 | 9.9 | 43 |
| Example 34 | 51 | | | | | | 49 | 38.5 | 9.5 | 22.0 | 1,150 | 52 | 39 | 10 | 2.7 | 6.7 | 70 | 13.4 | 61 |
| Example 35 | 32 | | | | | | 68 | 54.5 | 6.7 | 15.5 | 1,300 | 39 | 54 | 7 | 2.7 | 6.4 | 95 | 15.5 | 100 |
| Example 36 | 28 | | | | | | 72 | 59.0 | 5.9 | 13.7 | 1,350 | 35 | 59 | 6 | 2.7 | 5.8 | 98 | 13.7 | 100 |
| Example 37 | | 58 | | | | | 42 | 36.0 | 25.2 | 13.3 | 1,200 | 39 | 36 | 25 | 2.9 | 15.6 | 62 | 5.6 | 42 |
| Example 38 | | 54 | | | | | 46 | 39.0 | 23.9 | 12.6 | 1,200 | 37 | 39 | 24 | 2.9 | 15.5 | 65 | 11.1 | 88 |
| Example 39 | | 36 | | | | | 64 | 53.0 | 17.5 | 9.2 | 1,350 | 30 | 53 | 17 | 2.9 | 16.6 | 95 | 9.2 | 100 |
| Example 40 | | 40 | | | | | 70 | 59.0 | 14.9 | 7.8 | 1,350 | 26 | 59 | 15 | 2.9 | 14.7 | 99 | 7.8 | 100 |
| Example 41 | | | 55 | | | | 45 | 35.5 | 13.9 | 21.0 | 1,150 | 51 | 35 | 14 | 2.9 | 9.8 | 70 | 9.3 | 44 |
| Example 42 | | | 51 | | | | 49 | 39.0 | 13.1 | 19.8 | 1,200 | 48 | 39 | 13 | 2.9 | 9.6 | 73 | 9.1 | 46 |
| Example 43 | | | 34 | | | | 66 | 54.0 | 9.5 | 14.4 | 1,300 | 36 | 54 | 10 | 2.9 | 8.9 | 93 | 13.5 | 94 |
| Example 44 | | | 30 | | | | 70 | 58.0 | 8.6 | 12.9 | 1,350 | 33 | 58 | 9 | 2.9 | 7.9 | 92 | 12.6 | 97 |
| Example 45 | | | | 56 | | | 44 | 40.0 | 17.8 | 17.5 | 1,150 | 42 | 40 | 18 | 3.5 | 10.8 | 61 | 8.0 | 46 |
| Example 46 | | | | 37 | | | 63 | 55.0 | 12.7 | 12.5 | 1,350 | 32 | 55 | 13 | 3.5 | 12.1 | 95 | 12.5 | 100 |
| Example 47 | | | | 31 | | | 69 | 60.0 | 11.0 | 10.8 | 1,350 | 29 | 60 | 11 | 3.5 | 10.9 | 99 | 10.8 | 100 |
| Example 48 | | | | | 57 | | 43 | 35.0 | 19.4 | 15.5 | 1,200 | 46 | 35 | 19 | 1.9 | 12.2 | 63 | 6.7 | 43 |
| Example 49 | | | | | 29 | | 71 | 60.0 | 11.1 | 8.9 | 1,350 | 29 | 60 | 11 | 1.9 | 10.4 | 93 | 8.9 | 100 |
| Example 50 | | | | | | 60 | 40 | 36.0 | 24.4 | 14.3 | 1,200 | 40 | 36 | 24 | 3.0 | 15.4 | 63 | 6.4 | 45 |
| Example 51 | | | | | | 57 | 43 | 38.0 | 23.6 | 13.8 | 1,200 | 38 | 38 | 24 | 3.0 | 15.3 | 65 | 10.5 | 76 |
| Example 52 | | | | | | 37 | 63 | 54.0 | 16.9 | 9.9 | 1,350 | 29 | 54 | 17 | 3.0 | 15.5 | 92 | 9.9 | 100 |
| Example 53 | | | | | | 32 | 68 | 57.8 | 14.5 | 8.5 | 1,350 | 28 | 58 | 14 | 3.0 | 14.5 | 100 | 8.5 | 100 |
| Comparative Example 7 | 58 | | | | | | 42 | 33.0 | 10.5 | 24.2 | 1,150 | 57 | 33 | 10 | 2.7 | 6.0 | 57 | 4.1 | 17 |

(continued)

| | Sewage sludge incineration ash (%) | | | | | | Calcium source (%) | CaO content (%) | $P_2O_5$ content (%) | $SiO_2$ content (%) | Firing temperature (°C) | Oxide mass ratio in fired product | | | $SiO_2/Al_2O_3$ (Molar ratio) | Citric acid-soluble phosphate (%) | Ratio of citric acid-soluble phosphate (%) | Hydrochloric acid-soluble silicate (%) | Ratio of hydrochloric acid-soluble silicate (%) |
|---|---|---|---|---|---|---|---|---|---|---|---|---|---|---|---|---|---|---|---|
| | a1 | a2 | a5 | a6 | a7 | a8 | c3 | | | | | A | B | C | | | | | |
| Comparative Example 8 | | | 57 | | | | 43 | 34.0 | 14.3 | 21.6 | 1,150 | 52 | 34 | 14 | 2.9 | 8.4 | 59 | 4.3 | 20 |
| Comparative Example 9 | | | | 67 | | | 33 | 32.5 | 20.3 | 19.9 | 1,150 | 47 | 32 | 20 | 3.5 | 10.8 | 53 | 2.8 | 14 |
| Comparative Example 10 | | | | | 60 | | 40 | 32.5 | 20.2 | 16.2 | 1,150 | 47 | 32 | 20 | 1.9 | 9.5 | 47 | 2.1 | 13 |
| Comparative Example 11 | | | | | | 63 | 37 | 34.0 | 25.2 | 14.8 | 1,250 | 41 | 34 | 25 | 3.0 | 13.9 | 55 | 4.4 | 30 |

(4) With regard to results shown in Table 2 and Table 3

As shown in Table 2 and Table 3, the phosphate fertilizers of the present invention (Example 1 to 53) each having a content of CaO of 35 to 60% each had a ratio of citric acid-soluble phosphate of 60% (Example 16) to 100% (Example 12 and the like) and a ratio of hydrochloric acid-soluble silicate of 42% (Example 37) to 100 (Example 3 and the like) . In other words, the ratios were both high. In particular, the ratio of citric acid-soluble phosphate and ratio of hydrochloric acid-soluble silicate of each of Examples 12, 31, 32 and 53, which fell within the ranges illustrated in the trilinear diagrams of FIG. 1 and FIG. 2, were both 100%.

In contrast, the phosphate fertilizers of Comparative Examples 1 to 11 each had a ratio of citric acid-soluble phosphate of 44% (Comparative Example 4) to 75% (Comparative Example 1) and a ratio of hydrochloric acid-soluble silicate of 8% (Comparative Example 5) to 30% (Comparative Example 11). The ratio of hydrochloric acid-soluble silicate was particularly low.

In addition, when the molar ratio of $SiO_2/Al_2O_3$ in the phosphate fertilizer was 2.5 or more, the firing was able to be performed at lower temperatures and thus the firing was easier.

2. Examples 54 to 75 and Comparative Examples 12 to 32 (the case where calcium source is livestock excreta and livestock excreta-derived material)

(1) Production of phosphate fertilizer, and the like

Powdery phosphate fertilizers were produced by the same method as the production method with a rotary kiln in Examples 31 to 53 and the like described above except that: sewage sludge incineration ash (a9, a10) having chemical composition shown in Table 4, and chicken excreta incineration ash (c3) and calcium carbonate (c4) as calcium sources were used to prepare mixed raw materials in accordance with formulations shown in Table 5; and firing was performed at temperatures shown in Table 5, and their ratios of citric acid-soluble phosphate and the like were determined.

In addition, powdery phosphate fertilizers were produced by the same method as the production method with an electric furnace in Example 1 to 30 and the like described above except that: sewage sludge incineration ash (a11, a12) having chemical composition shown in Table 4, and chicken excreta incineration ash (c3) and calcium carbonate (c4) as calcium sources were used to prepare mixed raw materials in accordance with formulations shown in Table 6; and the firing was performed at temperatures shown in Table 6, and their ratios of citric acid-soluble phosphate and the like were determined.

Table 5 and Table 6 show the chemical composition and ratio of citric acid-soluble phosphate of each of the phosphate fertilizers, and the like.

[Table 4]

|  | $SiO_2$ (%) | $Al_2O_3$ (%) | CaO (%) | $P_2O_5$ (%) | $K_2O$ (%) |
|---|---|---|---|---|---|
| a9 | 34.7 | 22.3 | 7.2 | 14.9 | 1.4 |
| a10 | 27.1 | 28.8 | 6.0 | 22.9 | 1.5 |
| a11 | 19.8 | 11.3 | 12.3 | 33.9 | 2.8 |
| a12 | 18.9 | 11.1 | 10.0 | 36.0 | 3.9 |
| c3 | 2.1 | 0.5 | 34.0 | 14.5 | 23.5 |
| c4 | 0.1 | 0.0 | 56.8 | 0.0 | 0.0 |
| Note) Chemical composition of main components is shown. | | | | | |

[Table 5]

| | Sewage sludge incineration ash (%) | | Calcium source (%) | | Firing temperature (°C) | Oxide mass ratio in fired product | | | Ca/P (Molar ratio) | Al$_2$O$_3$ (%) | Total phosphate (%) | Citric acid-soluble phosphate (%) | Ratio of citric acid-soluble phosphate (%) | Total silicate (%) | Hydrochloric acid-soluble silicate (%) | Ratio of hydrochloric acid-soluble silicate (%) |
|---|---|---|---|---|---|---|---|---|---|---|---|---|---|---|---|---|
| | a9 | a10 | c3 | c4 | | A | B | C | | | | | | | | |
| Comparative Example 12 | 71 | - | 15 | 14 | 1,000 | 66 | 20 | 14 | 1.8 | 17 | 14 | 7 | 50 | 27 | 3 | 10 |
| Comparative Example 13 | 71 | - | 15 | 14 | 1,100 | 66 | 20 | 14 | 1.8 | 17 | 14 | 8 | 57 | 27 | 4 | 15 |
| Comparative Example 14 | 71 | - | 15 | 14 | 1,200 | 66 | 20 | 14 | 1.8 | 18 | 14 | 8 | 57 | 28 | 3 | 11 |
| Example 54 | 44 | - | 15 | 41 | 1,300 | 49 | 40 | 11 | 4.6 | 13 | 11 | 10 | 91 | 20 | 20 | 100 |
| Example 55 | 32 | - | 15 | 53 | 1,300 | 40 | 51 | 9 | 7.2 | 10 | 9 | 8 | 89 | 15 | 15 | 100 |
| Example 56 | 32 | - | 15 | 53 | 1,350 | 40 | 51 | 9 | 7.2 | 10 | 9 | 9 | 100 | 16 | 16 | 100 |
| Example 57 | 32 | - | 15 | 53 | 1,400 | 40 | 51 | 9 | 7.2 | 10 | 9 | 9 | 100 | 16 | 16 | 100 |
| Comparative Example 15 | - | 72 | 12 | 16 | 1,100 | 60 | 20 | 20 | 1.3 | 23 | 20 | 12 | 60 | 22 | 4 | 18 |
| Comparative Example 16 | - | 72 | 12 | 16 | 1,150 | 60 | 20 | 20 | 1.3 | 23 | 20 | 12 | 60 | 22 | 6 | 27 |
| Comparative Example 17 | - | 72 | 12 | 16 | 1,200 | 59 | 20 | 21 | 1.2 | 23 | 21 | 11 | 52 | 22 | 5 | 23 |
| Comparative Example 18 | - | 57 | 12 | 31 | 1,200 | 52 | 30 | 18 | 2.1 | 20 | 18 | 13 | 72 | 19 | 5 | 26 |
| Comparative Example 19 | - | 57 | 12 | 31 | 1,250 | 52 | 30 | 18 | 2.1 | 20 | 18 | 13 | 72 | 19 | 5 | 26 |
| Comparative Example 20 | - | 57 | 12 | 31 | 1,300 | 51 | 31 | 18 | 2.2 | 20 | 18 | 14 | 78 | 19 | 5 | 26 |
| Example 58 | - | 45 | 12 | 43 | 1,250 | 45 | 40 | 15 | 3.4 | 17 | 15 | 13 | 87 | 16 | 16 | 100 |
| Example 59 | - | 45 | 12 | 43 | 1,300 | 45 | 40 | 15 | 3.4 | 17 | 15 | 12 | 80 | 16 | 16 | 100 |
| Example 60 | - | 45 | 12 | 43 | 1,350 | 44 | 40 | 16 | 3.3 | 17 | 16 | 13 | 83 | 16 | 16 | 100 |
| Example 61 | - | 33 | 12 | 55 | 1,250 | 47 | 40 | 13 | 3.9 | 13 | 13 | 11 | 85 | 12 | 12 | 100 |

| | Sewage sludge incineration ash (%) | | Calcium source (%) | | Firing temperature (°C) | Oxide mass ratio in fired product | | | Ca/P (Molar ratio) | $Al_2O_3$ (%) | Total phosphate (%) | Citric acid-soluble phosphate (%) | Ratio of citric acid-soluble phosphate (%) | Total silicate (%) | Hydrochloric acid-soluble silicate (%) | Ratio of hydrochloric acid-soluble silicate (%) |
|---|---|---|---|---|---|---|---|---|---|---|---|---|---|---|---|---|
| | a9 | a10 | c3 | c4 | | A | B | C | | | | | | | | |
| Example 62 | - | 33 | 12 | 55 | 1,300 | 36 | 51 | 13 | 5.0 | 13 | 13 | 12 | 92 | 13 | 13 | 100 |
| Example 63 | - | 33 | 12 | 55 | 1,350 | 36 | 51 | 13 | 5.0 | 13 | 13 | 12 | 92 | 13 | 13 | 100 |
| Note) Ca/P=(B)/(C)×2.54×0.5 | | | | | | | | | | | | | | | | |

[Table 6]

| | Sewage sludge incineration ash (%) | | Calcium source (%) | | Firing temperature (°C) | Oxide mass ratio in fired product | | | Ca/P (Molar ratio) | Al$_2$O$_3$ (%) | Total phosphate (%) | Citric acid-soluble phosphate (%) | Ratio of citric acid-soluble phosphate (%) | Total silicate (%) | Hydrochloric acid-soluble silicate (%) | Ratio of hydrochloric acid-soluble silicate (%) |
|---|---|---|---|---|---|---|---|---|---|---|---|---|---|---|---|---|
| | a11 | a12 | c3 | c4 | | A | B | C | | | | | | | | |
| Comparative Example 21 | 82 | - | 8 | 10 | 1,000 | 49 | 20 | 31 | 0.8 | 10 | 31 | 14 | 45 | 18 | 1 | 6 |
| Comparative Example 22 | 82 | - | 8 | 10 | 1,050 | 49 | 20 | 31 | 0.8 | 10 | 31 | 14 | 45 | 18 | 1 | 6 |
| Comparative Example 23 | 82 | - | 8 | 10 | 1,100 | 49 | 20 | 31 | 0.8 | 10 | 31 | 15 | 48 | 18 | 1 | 6 |
| Comparative Example 24 | 66 | - | 8 | 26 | 1, 150 | 43 | 30 | 27 | 1.4 | 9 | 27 | 14 | 52 | 15 | 1 | 7 |
| Comparative Example 25 | 66 | - | 8 | 26 | 1,200 | 43 | 30 | 27 | 1.4 | 9 | 27 | 14 | 52 | 15 | 2 | 13 |
| Comparative Example 26 | 66 | - | 8 | 26 | 1,250 | 42 | 30 | 28 | 1.4 | 9 | 28 | 15 | 54 | 16 | 1 | 6 |
| Example 64 | 52 | - | 8 | 40 | 1,250 | 37 | 40 | 23 | 2.2 | 7 | 23 | 17 | 74 | 13 | 11 | 85 |
| Example 65 | 52 | - | 8 | 40 | 1,300 | 36 | 40 | 24 | 2.1 | 7 | 24 | 17 | 71 | 13 | 11 | 85 |
| Example 66 | 52 | - | 8 | 40 | 1,350 | 36 | 40 | 24 | 2.1 | 7 | 24 | 18 | 75 | 13 | 11 | 85 |
| Example 67 | 39 | - | 8 | 53 | 1,300 | 31 | 50 | 19 | 3.3 | 6 | 19 | 17 | 89 | 11 | 11 | 100 |
| Example 68 | 39 | - | 8 | 53 | 1,350 | 30 | 51 | 19 | 3.4 | 6 | 19 | 18 | 95 | 11 | 10 | 91 |
| Example 69 | 39 | - | 8 | 53 | 1,400 | 30 | 51 | 19 | 3.4 | 6 | 19 | 19 | 100 | 11 | 11 | 100 |
| Comparative Example 27 | - | 80 | 6 | 14 | 1,000 | 47 | 20 | 33 | 0.8 | 10 | 33 | 14 | 42 | 17 | 1 | 6 |
| Comparative Example 28 | - | 80 | 6 | 14 | 1,050 | 47 | 20 | 33 | 0.8 | 10 | 33 | 13 | 39 | 17 | 1 | 6 |
| Comparative Example 29 | - | 80 | 6 | 14 | 1, 100 | 47 | 20 | 33 | 0.8 | 10 | 33 | 14 | 42 | 17 | 1 | 6 |
| Comparative Example 30 | - | 65 | 6 | 29 | 1,150 | 41 | 30 | 29 | 1.3 | 9 | 29 | 16 | 55 | 15 | 1 | 7 |

EP 2 725 001 B1

| | Sewage sludge incineration ash (%) | | Calcium source (%) | | Firing temperature (°C) | Oxide mass ratio in fired product | | | Ca/P (Molar ratio) | $Al_2O_3$ (%) | Total phosphate (%) | Citric acid-soluble phosphate (%) | Ratio of citric acid-soluble phosphate (%) | Total silicate (%) | Hydrochloric acid-soluble silicate (%) | Ratio of hydrochloric acid-soluble silicate (%) |
|---|---|---|---|---|---|---|---|---|---|---|---|---|---|---|---|---|
| | a11 | a12 | c3 | c4 | | A | B | C | | | | | | | | |
| Comparative Example 31 | - | 65 | 6 | 29 | 1,200 | 41 | 30 | 29 | 1.3 | 9 | 29 | 15 | 52 | 15 | 1 | 7 |
| Comparative Example 32 | - | 65 | 6 | 29 | 1,250 | 41 | 30 | 29 | 1.3 | 9 | 29 | 17 | 59 | 15 | 2 | 13 |
| Example 70 | - | 52 | 6 | 42 | 1, 150 | 36 | 39 | 25 | 2.0 | 7 | 25 | 15 | 60 | 13 | 10 | 77 |
| Example 71 | - | 52 | 6 | 42 | 1,200 | 36 | 39 | 25 | 2.0 | 7 | 25 | 16 | 64 | 13 | 12 | 92 |
| Example 72 | - | 52 | 6 | 42 | 1,250 | 35 | 40 | 25 | 2.0 | 7 | 25 | 16 | 64 | 13 | 12 | 92 |
| Example 73 | - | 40 | 6 | 54 | 1,250 | 30 | 49 | 21 | 3.0 | 6 | 21 | 15 | 71 | 10 | 9 | 90 |
| Example 74 | - | 40 | 6 | 54 | 1,300 | 29 | 50 | 21 | 3.0 | 6 | 21 | 19 | 90 | 10 | 10 | 100 |
| Example 75 | - | 40 | 6 | 54 | 1,350 | 29 | 50 | 21 | 3.0 | 6 | 21 | 20 | 95 | 10 | 10 | 100 |

Note) $Ca/P = (B)/(C) \times 2.54 \times 0.5$

EP 2 725 001 B1

(2) With regard to results shown in Table 5 and Table 6

As shown in Table 5 and Table 6, the phosphate fertilizers each having a content of CaO of 35 to 55%, a molar ratio of Ca/P of 2.0 to 7.5, and a content of $Al_2O_3$ of 19% or less (Examples 54 to 75) each had a ratio of citric acid-soluble phosphate of 60% (Example 70) or more and a ratio of hydrochloric acid-soluble silicate of 77% (Example 70) or more. In other words, both the ratios were high.

In particular, as shown in Table 5, the phosphate fertilizers fired using a rotary kiln as a firing furnace (Examples 54 to 63) each had a ratio of citric acid-soluble phosphate of 80 (Example 59) to 100% (Example 56 and the like) and a ratio of hydochoric acid-soluble silicate of 100% (Example 54 and the like).

In contrast, the phosphate fertilizers of Comparative Examples 12 to 32 each had a ratio of citric acid-soluble phosphate of 78% (Comparative Example 20) or less and a ratio of hydrochloric acid-soluble silicate of 26% (Comparative Example 18 and the like) or less. The ratio of hydrochloric acid-soluble silicate was particularly low.

3. Examples 76 to 81 and Comparative Examples 33 to 38 (the case where calcium source is water-washed product of livestock excreta incineration ash)

(1) Production of phosphate fertilizer, and the like

Sewage sludge incineration ash (a13 to 15) having chemical composition shown in Table 7, chicken excreta incineration ash, a water-washed product thereof, limestone fine powder (325 mesh product), and ready-mixed concrete sludge as calcium sources, and calcium silicate as a silica source were used and weighed in accordance with formulations shown in Table 8. After that, the mixing machine was used to prepare mixed raw materials.

Next, the mixed raw materials were fired using a rotary kiln having an inner diameter of 370 mm and a length of 3,200 mm for a mean residence time in the kiln of 40 minutes at a kiln rotation speed of 1.15 rpm, a raw material-feeding amount of 30 kg-dry/h, and temperatures shown in Table 8 to produce phosphate fertilizers, and their ratios of citric acid-soluble phosphate and the like were determined.

Table 8 shows the chemical composition and ratio of citric acid-soluble phosphate of each of the phosphate fertilizers, and the like.

It should be noted that the contents of CaO, $SiO_2$, and $P_2O_5$ shown in Table 8 are the contents of the respective oxides in the mixed raw material and the fired product. In addition, Comparative Examples 33 to 35 are each an example in which the mixed raw material and the fired product each have a content of CaO of less than 35%, and Comparative Examples 36 to 38 are each an example in which chicken excreta not washed with water was directly used as a raw material.

[Table 7]

| | $SiO_2$ (%) | $Al_2O_3$ (%) | CaO (%) | $Na_2O$ (%) | $K_2O$ (%) | $P_2O_5$ (%) | Cl (%) |
|---|---|---|---|---|---|---|---|
| Sewage sludge incineration ash a13 | 36.0 | 23.0 | 7.6 | 1.0 | 1.4 | 15.6 | 0.4 |
| Sewage sludge incineration ash a14 | 25.0 | 12.2 | 12.6 | 0.6 | 2.1 | 25.5 | 0.1 |
| Sewage sludge incineration ash a15 | 20.0 | 11.2 | 12.3 | 0.6 | 0.6 | 33.9 | 0.1 |
| Chicken excreta incineration ash | 4.1 | 0.8 | 31.0 | 2.6 | 22.0 | 17.3 | 4.2 |
| Water-washed product of chicken excreta incineration ash | 5.0 | 1.1 | 35.6 | 2.5 | 8.7 | 25.0 | 0.4 |
| Limestone fine powder | 0.1 | 0.0 | 56.8 | 0.0 | 0.0 | 0.0 | 0.0 |
| Calcium silicate | 49.3 | 3.8 | 30.3 | 0.2 | 0.7 | 0.1 | 0.1 |
| Ready-mixed concrete sludge | 22.6 | 5.0 | 46.3 | 0.3 | 0.4 | 0.0 | 0.0 |

[Table 8]

| | Sewage sludge incineration ash (%) | | | Chicken excreta incineration ash (%) | Chicken excreta ash water-washed product (%) | Limestone fine powder (%) | Calcium silicate (%) | Ready-mixed concrete sludge (%) | CaO content (%) | SiO$_2$ content (%) | P$_2$O$_5$ content (%) | Firing temperature (°c) | Presence or absence of coating in exhaust pipe | Oxide mass ratio in fired product | | | Si$_2$O/Al$_2$O$_3$ (Molar ratio) | Citric acid-soluble phosphate (%) | Ratio of citric acid-soluble phosphate (%) | Hydrochloric acid-soluble silicate (%) | Ratio of hydrochloric acid-soluble silicate (%) |
| | a13 | a14 | a15 | | | | | | | | | | | A | B | C | | | | | |
|---|---|---|---|---|---|---|---|---|---|---|---|---|---|---|---|---|---|---|---|---|---|
| Example 76 | 28.0 | – | – | – | 34.4 | 37.6 | – | – | 42.1 | 13.9 | 15.3 | 1,300 | Absent | 43 | 42 | 15 | 2.9 | 14.5 | 95 | 13.9 | 100 |
| Example 77 | – | 30.0 | – | – | 33.8 | 36.2 | – | – | 44.4 | 11.3 | 19.7 | 1,250 | Absent | 36 | 44 | 20 | 3.9 | 16.7 | 85 | 11.3 | 100 |
| Example 78 | – | – | 25.4 | – | 35.2 | 39.5 | – | – | 46.2 | 8.2 | 21.1 | 1,300 | Absent | 33 | 46 | 21 | 3.5 | 18.0 | 85 | 8.3 | 100 |
| Example 79 | – | 41.1 | – | – | 30.7 | 28.2 | – | – | 37.7 | 13.9 | 21.3 | 1,150 | Absent | 41 | 38 | 21 | 3.8 | 13.4 | 63 | 5.8 | 42 |
| Example 80 | – | – | 27.3 | – | 34.6 | 38.1 | – | – | 45.4 | 8.7 | 21.8 | 1,250 | Absent | 33 | 45 | 22 | 3.5 | 16.1 | 74 | 8.0 | 92 |
| Example 81 | – | – | 11.5 | – | 39.3 | 49.3 | – | – | 55.6 | 5.5 | 17.6 | 1,300 | Absent | 27 | 55 | 18 | 4.2 | 16.7 | 95 | 5.5 | 100 |
| Comparative Example 33 | 7.2 | – | – | – | 39.5 | – | 53.3 | – | 32.4 | 32.6 | 11.7 | 1,150 | Absent | 56 | 32 | 12 | 12.8 | 8.5 | 73 | 7.5 | 23 |
| Comparative Example 34 | – | 50.0 | – | – | 26.1 | – | – | 23.8 | 28.4 | 20.5 | 21.3 | 1,150 | Absent | 51 | 28 | 21 | 4.3 | 14.0 | 68 | 5.5 | 27 |
| Comparative Example 35 | – | – | 46.2 | – | 29.1 | 24.7 | – | – | 33.7 | 11.9 | 25.7 | 1,150 | Absent | 40 | 34 | 26 | 3.3 | 14.9 | 58 | 2.1 | 18 |
| Comparative Example 36 | 22.1 | – | – | 36.0 | – | 41.9 | – | – | 46.4 | 11.8 | 12.4 | 1,300 | Present | 42 | 46 | 12 | 3.0 | 10.6 | 88 | 10.9 | 92 |
| Comparative Example 37 | – | 19.1 | – | 36.1 | – | 44.7 | – | – | 50.3 | 8.1 | 14.4 | 1,250 | Present | 35 | 50 | 15 | 4.1 | 13.9 | 97 | 8.1 | 100 |
| Comparative Example 38 | – | – | 14.4 | 37.7 | – | 47.9 | – | – | 53.4 | 5.8 | 15.0 | 1,350 | Present | 32 | 53 | 15 | 3.9 | 14.4 | 96 | 5.8 | 100 |

(2) With regard to results shown in Table 8

As shown in Table 8, the phosphate fertilizers each having a content of CaO of 35 to 60%, a content of $SiO_2$ of 5 to 35%, a content of $P_2O_5$ of 5 to 35%, and the like each have a ratio of citric acid-soluble phosphate of 63% (Example 79) or more and a ratio of hydrochloric acid-soluble silicate of 42% (Example 79) or more, and hence their fertilizer effects are high in terms of both the components.

In contrast, the phosphate fertilizers each having a content of CaO outside the above-mentioned range (Comparative Examples 33 to 35) each have a ratio of hydrochloric acid-soluble silicate of 27% (Comparative Example 34) or less, which is remarkable low, although having a relatively high ratio of citric acid-soluble phosphate. As apparent from the foregoing, a phosphate fertilizer having a low ratio of hydrochloric acid-soluble silicate is poor in silicate-supplying characteristic, and hence its fertilizer value is low.

In addition, the phosphate fertilizers each using chicken excreta incineration ash not washed with water as a raw material (Comparative Examples 36 to 38) each had a ratio of citric acid-soluble phosphate of 88% (Comparative Example 36) or more and a ratio of hydrochloric acid-soluble silicate of 92% (Comparative Example 36) or more. In other words, both the ratios were high. However, their production had to be stopped for the following reason.

That is, in continuous production with a rotary kiln using livestock excreta incineration ash not washed with water as a raw material, on the third day from the start of the production, combustion exhaust gas in the furnace became unable to be exhausted in an induced manner outside the system. Accordingly, the production process was stopped, followed by cooling, and then the inside of an exhaust gas duct connecting the rotary kiln to a dust collector was inspected. As a result, the deposition of fine powder was found. Then, a powder X-ray diffraction method confirmed that the main minerals of the deposited substance were potassium chloride, syngenite, and gypsum dihydrate.

4. Examples 82 to 103 and Comparative Examples 39 to 50 (the case where calcium source and silica source are each ready-mixed concrete sludge)

(1) Production of phosphate fertilizer, and the like

Sewage sludge incineration ash (a16 to a20) having chemical composition shown in Table 9, limestone fine powder (325 mesh product), silica stone powder (Blaine specific surface area: 3, 900 $g/cm^3$), and a dry pulverized product of ready-mixed concrete sludge were used and weighed in accordance with formulations shown in Table 10. After that, the mixing machine was used to prepare mixed raw materials.

Next, phosphate fertilizers were produced by the same method as the production method with a rotary kiln in Examples 76 to 81 and the like described above except that the mixed raw materials were fired at firing temperatures shown in Table 10, and their ratios of citric acid-soluble phosphate and the like were determined.

Table 10 shows the chemical composition and ratio of citric acid-soluble phosphate of each of the phosphate fertilizers, and the like.

[Table 9]

| | $SiO_2$ (%) | $Al_2O_3$ (%) | CaO (%) | $P_2O_5$ (%) |
|---|---|---|---|---|
| Sewage sludge incineration ash a16 | 36.0 | 23.0 | 7.6 | 15.6 |
| Sewage sludge incineration ash a17 | 31.1 | 18.4 | 6.6 | 20.6 |
| Sewage sludge incineration ash a18 | 25.0 | 12.2 | 12.6 | 25.5 |
| Sewage sludge incineration ash a19 | 22.0 | 20.2 | 7.2 | 27.6 |
| Sewage sludge incineration ash a20 | 19.8 | 11.2 | 12.3 | 33.9 |
| Limestone fine powder | 0.1 | 0.0 | 56.8 | 0.0 |
| Silica stone powder | 93.2 | 4.9 | 0.1 | 0.0 |
| Dry pulverized product of ready-mixed concrete sludge | 22.6 | 5.0 | 46.3 | 0.0 |

[Table 10]

| | Sewage sludge incineration ash (%) | | | | | Limestone fine powder (%) | Silica stone powder (%) | Ready-mixed concrete sludge (%) | CaO content (%) | SiO₂ content (%) | P₂O₅ content (%) | Firing temperature (C°) | Oxide mass ratio in fired product | | | SiO₂/Al₂O₃ (Molar ratio) | Citric acid-soluble phosphate (%) | Ratio of citric acid-soluble phosphate (%) | Hydrochloric acid-soluble silicate (%) | Ratio of hydrochloric acid-soluble silicate (%) |
|---|---|---|---|---|---|---|---|---|---|---|---|---|---|---|---|---|---|---|---|---|
| | a16 | a17 | a18 | a19 | a20 | | | | | | | | A | B | C | | | | | |
| Example 82 | – | 43.6 | – | – | – | 53.7 | 2.7 | – | 45.0 | 21.7 | 12.1 | 1,250 | 43 | 45 | 12 | 3.4 | 9.7 | 80 | 21.7 | 100 |
| Example 83 | – | – | – | 36.2 | – | 53.8 | 10 | – | 45.0 | 23.5 | 13.6 | 1,250 | 41 | 45 | 14 | 3.8 | 10.9 | 80 | 23.5 | 100 |
| Example 84 | – | – | – | – | 26.0 | 67.7 | 6.4 | – | 57.0 | 15.2 | 12.1 | 1,350 | 31 | 57 | 12 | 5.8 | 12.1 | 100 | 15.2 | 100 |
| Example 85 | – | 36.9 | – | – | – | – | – | 63.1 | 37.0 | 29.6 | 8.9 | 1,200 | 54 | 37 | 9 | 4.4 | 6.2 | 70 | 12.9 | 44 |
| Example 86 | – | – | 37.9 | – | – | – | – | 62.1 | 40.0 | 28.1 | 11.5 | 1,300 | 49 | 40 | 11 | 5.2 | 9.3 | 81 | 25.0 | 89 |
| Example 87 | – | – | – | 36.1 | – | – | – | 63.9 | 38.0 | 26.4 | 11.8 | 1,250 | 50 | 38 | 12 | 3.6 | 9.5 | 80 | 17.5 | 66 |
| Example 88 | – | – | – | – | 24.8 | – | – | 75.2 | 45.0 | 26.0 | 10.0 | 1,260 | 45 | 45 | 10 | 5.6 | 8.4 | 84 | 22.8 | 88 |
| Example 89 | 33.5 | – | – | – | – | 50.9 | – | 15.7 | 52.0 | 21.0 | 7.0 | 1,300 | 41 | 52 | 7 | 3.1 | 6.4 | 91 | 19.4 | 93 |
| Example 90 | 46.4 | – | – | – | – | 43.3 | – | 10.3 | 42.0 | 24.4 | 9.2 | 1,250 | 49 | 42 | 9 | 2.9 | 7.4 | 80 | 24.4 | 100 |
| Example 91 | 51.9 | – | – | – | – | 40.1 | – | 8.0 | 38.0 | 25.7 | 10.1 | 1,150 | 52 | 38 | 10 | 2.8 | 7.1 | 70 | 15.6 | 61 |
| Example 92 | – | 20.3 | – | – | – | 42.1 | – | 37.6 | 58.0 | 20.2 | 5.7 | 1,300 | 36 | 58 | 6 | 4.5 | 5.2 | 92 | 19.1 | 94 |
| Example 93 | – | 25.4 | – | – | – | 39.5 | – | 35.2 | 54.0 | 21.2 | 7.0 | 1,350 | 39 | 54 | 7 | 4.2 | 6.5 | 93 | 20.0 | 94 |
| Example 94 | – | 32.8 | – | – | – | 34.5 | – | 32.7 | 48.0 | 22.9 | 8.8 | 1,280 | 43 | 48 | 9 | 3.9 | 7.9 | 90 | 21.2 | 93 |
| Example 95 | – | 39.7 | – | – | – | 31.0 | – | 29.3 | 43.0 | 24.2 | 10.4 | 1,250 | 47 | 43 | 10 | 3.7 | 8.3 | 80 | 24.2 | 100 |
| Example 96 | – | – | 23.4 | – | – | 39.5 | – | 37.0 | 58.0 | 19.4 | 8.2 | 1,320 | 34 | 58 | 8 | 5.1 | 7.3 | 89 | 17.9 | 92 |
| Example 97 | – | – | 30.7 | – | – | 35.6 | – | 33.7 | 53.0 | 20.5 | 10.5 | 1,320 | 37 | 53 | 10 | 4.8 | 9.1 | 87 | 18.7 | 91 |
| Example 98 | – | – | 42.7 | – | – | 28.3 | – | 29.0 | 45.0 | 22.3 | 14.1 | 1,250 | 41 | 45 | 14 | 4.4 | 11.3 | 80 | 22.3 | 100 |
| Example 99 | – | – | 50.7 | – | – | 23.5 | – | 25.9 | 40.0 | 23.4 | 16.3 | 1,280 | 44 | 40 | 16 | 2.9 | 14.0 | 86 | 21.8 | 93 |
| Example 100 | – | – | – | 35.3 | – | 33.5 | – | 31.2 | 47.0 | 19.4 | 12.7 | 1,280 | 40 | 47 | 13 | 5.1 | 10.2 | 80 | 19.4 | 100 |
| Example 101 | – | – | – | – | 20.5 | 42.3 | – | 37.3 | 59.5 | 17.0 | 9.4 | 1,350 | 31 | 60 | 9 | 4.2 | 9.0 | 95 | 16.1 | 95 |
| Example 102 | – | – | – | – | 37.8 | 31.9 | – | 30.3 | 47.0 | 18.3 | 16.4 | 1,300 | 37 | 47 | 16 | 4.3 | 13.1 | 80 | 18.3 | 100 |
| Example 103 | – | – | – | – | 41.8 | 20.4 | – | 37.8 | 42.0 | 20.6 | 17.4 | 1,280 | 41 | 42 | 17 | 4.3 | 13.9 | 80 | 20.6 | 100 |
| Comparative Example 39 | 100.0 | – | – | – | – | – | – | – | 7.8 | 37.0 | 16.0 | 1,000 | 76 | 8 | 16 | 2.7 | 6.9 | 43 | 1.1 | 3 |
| Comparative Example 40 | – | – | 100.0 | – | – | – | – | – | 14.2 | 28.2 | 28.8 | 1,000 | 57 | 14 | 29 | 3.5 | 11.8 | 41 | 0.3 | 1 |
| Comparative Example 41 | – | – | – | – | 100.0 | – | – | – | 13.1 | 21.1 | 36.1 | 1,100 | 51 | 13 | 36 | 3.0 | 11.2 | 31 | 0.1 | 1 |
| Comparative Example 42 | 60.7 | – | – | – | – | 39.3 | – | – | 33.0 | 26.8 | 11.6 | 1,100 | 55 | 33 | 12 | 2.7 | 4.6 | 40 | 5.1 | 19 |
| Comparative Example 43 | – | – | 68.1 | – | – | 31.9 | – | – | 34.0 | 21.7 | 22.1 | 1,150 | 44 | 34 | 22 | 3.5 | 12.2 | 55 | 4.3 | 20 |
| Comparative Example 44 | – | – | – | – | 65.5 | 34.5 | – | – | 34.0 | 16.0 | 27.3 | 1,250 | 39 | 34 | 27 | 3.0 | 15.0 | 55 | 4.8 | 30 |

| | | | | | | | | | | | | | | | | | | | |
|---|---|---|---|---|---|---|---|---|---|---|---|---|---|---|---|---|---|---|---|
| Example 44 | – | – | – | – | – | – | – | – | – | – | – | – | – | – | – | – | – | – | – | 50.5 |
| Comparative Example 45 | 15 | 4.9 | 40 | 3.5 | 3.5 | 9 | 30 | 61 | 1,150 | 8.8 | 32.9 | 30.0 | 49.5 | – | – | – | – | – | – | – |
| Comparative Example 46 | 14 | 3.9 | 53 | 9.1 | 4.4 | 17 | 32 | 51 | 1,150 | 17.2 | 28.1 | 31.5 | 42.4 | – | – | – | – | 57.6 | – | – |
| Comparative Example 47 | 12 | 2.9 | 52 | 10.3 | 4.4 | 20 | 33 | 47 | 1,200 | 19.8 | 24.2 | 33.0 | 48.8 | – | – | 51.2 | – | – | – | – |
| Comparative Example 48 | 17 | 4.7 | 57 | 6.5 | 2.8 | 11 | 33 | 56 | 1,150 | 11.3 | 27.6 | 32.5 | 5.0 | – | 35.1 | – | – | – | – | 59.7 |
| Comparative Example 49 | 20 | 5.4 | 59 | 7.9 | 3.4 | 13 | 33 | 54 | 1,150 | 13.5 | 26.9 | 33.0 | 24.2 | – | 22.0 | – | – | – | 53.9 | – |
| Comparative Example 50 | 36 | 9.0 | 54 | 10.2 | 4.0 | 19 | 34 | 47 | 1,200 | 18.8 | 24.9 | 34.0 | 23.1 | – | 16.7 | – | – | 60.3 | – | – |

(2) With regard to results shown in Table 10

As shown in Table 10, the phosphate fertilizers each having a content of CaO of 35 to 60%, a content of $SiO_2$ of 15 to 30%, a content of $P_2O_5$ of 5 to 30%, and the like (Examples 82 to 103) each have a ratio of citric acid-soluble phosphate of 70% (Example 85 and the like) or more and a ratio of hydrochloric acid-soluble silicate of 44% (Example 85) or more. In other words, the ratios are high.

In addition, the phosphate fertilizers each using limestone fine powder and ready-mixed concrete sludge as its calcium source and silica source (Examples 89 to 103) each have a ratio of citric acid-soluble phosphate of 70% (Example 91) or more and a ratio of hydrochloric acid-soluble silicate of 61% (Example 91) or more. In other words, the ratios are even higher.

In addition, the phosphate fertilizers each using only ready-mixed concrete sludge as its calcium source and silica source (Examples 85 to 88) each have a ratio of citric acid-soluble phosphate of 70% (Example 85) or more and a ratio of hydrochloric acid-soluble silicate of 44% (Example 85) or more. In other words, the ratios are high. Therefore, ready-mixed concrete sludge can be used alone as each of the calcium source and the silica source. Accordingly, the use of ready-mixed concrete sludge as the calcium source and the silica source can simplify the raw material-blending process and can save natural resources by reducing the use amounts of a natural calcium source and silica source.

5. Examples 104 and 105, and Comparative Examples 51 and 52 (the case where mixed raw material is granulated)

(1) Production of phosphate fertilizer, and the like

Sewage sludge incineration ash (a21) having chemical composition shown in Table 11 and limestone powder (325 mesh product, manufactured by Ube Material Industries, Ltd.) as a calcium source were used and weighed in accordance with formulations shown in Table 12. After that, mixed raw materials (powder A and powder B) were prepared using the mixing machine.

Next, the mixed raw materials were granulated using a small pan type pelletizer while water was added by spray, to prepare spherical pellets A all of which passed through a sieve having a nominal opening size of 5.6 mm and 80% of which remained on a sieve having a nominal opening size of 2 mm, and pellets B all of which passed through a sieve having a nominal opening size of 5.6 mm and 90% of which remained on a sieve having a nominal opening size of 2 mm.

Further, phosphate fertilizers were produced by the same method as the production method with a rotary kiln in Examples 76 to 81 and the like described above except that the pellets A, pellets B, powder A, and powder B were fired at temperatures shown in Table 12, and their ratios of citric acid-soluble phosphate and the like were determined.

Table 12 shows the chemical composition and ratio of citric acid-soluble phosphate of each of the phosphate fertilizers, and the like.

Next, the phosphate fertilizers were each treated with a vibrating sieve to obtain a sized phosphate fertilizer that passed through a sieve having a nominal opening size of 4 mm and remained on a sieve having a nominal opening size of 2 mm. Five pieces of the sized phosphate fertilizer were randomly selected, their hardnesses (crushing strength) were measured using a Kiya hardness tester, and their average was determined. Table 12 shows the ratio of the mass of the phosphate fertilizer discharged from the exit of the kiln to the mass of the raw material (pellets and powder) loaded into the kiln (yield of phosphate fertilizer before sizing) and the ratio of the mass of the sized phosphate fertilizer thereto (yield of sized phosphate fertilizer).

[Table 11]

| | $SiO_2$ (%) | $Al_2O_3$ (%) | CaO (%) | $P_2O_5$ (%) |
|---|---|---|---|---|
| Sewage sludge incineration ash a21 | 31.1 | 18.4 | 6.6 | 20.6 |
| Limestone powder | 0.1 | 0.0 | 56.8 | 0.0 |

[Table 12]

| | Sample | Sewage sludge incineration ash a21 (%) | Limestone powder (%) | Firing temperature (°C) | Yield of phosphate fertilizer before sizing (%) | Yield of sized phosphate fertilizer (%) | Average hardness of sized phosphate fertilizer (kgf) | Oxide mass ratio in fired product | | | $SiO_2/Al_2O_3$ molar ratio | Tota1 phosphate (%) | Citric acid-soluble phosphate (%) | Ratio of citric acid-soluble phosphate (%) | Total silicate (%) | Hydrochloric acid-soluble silicate (%) | Ratio of hydrochloric acid-soluble silicate (%) |
| | | | | | | | | A | B | C | | | | | | | |
|---|---|---|---|---|---|---|---|---|---|---|---|---|---|---|---|---|---|
| Example 104 | Pellet A | 46.6 | 53.4 | 1,230 | 81 | 50 | 3.3 | 46 | 44 | 10 | 2.9 | 10.2 | 10.0 | 97.8 | 25.2 | 22.4 | 88.9 |
| Example 105 | Pellet B | 34.5 | 65.5 | 1,350 | 83 | 55 | 1.9 | 35 | 57 | 8 | 2.9 | 8.3 | 8.2 | 98.9 | 19.7 | 17.6 | 89.3 |
| Comparative Example 51 | Powder A | 46.6 | 53.4 | 1,220 | 75 | 12 | - | 47 | 43 | 10 | 2.9 | 10.0 | 9.5 | 95.0 | 26.2 | 20.7 | 79.0 |
| Comparative Example 52 | Powder B | 34.5 | 65.5 | 1,320 | 74 | 11 | - | 34 | 56 | 10 | 2.9 | 10.5 | 9.7 | 92.3 | 15.6 | 11.5 | 73.7 |

EP 2 725 001 B1

(2) With regard to results shown in Table 12

(i) Yield

The yield of the phosphate fertilizer before the sizing is 75% in Comparative Example 51 while being 81% in Example 104, and is 74% in Comparative Example 52 while being 83% in Example 105. In other words, the yield in Example is higher in each comparison.

In addition, the yield of the sized phosphate fertilizer is 12% in Comparative Example 51 while being 50% in Example 104, and is 11% in Comparative Example 52 while being 55% in Example 105. In other words, the yield in Example is as high as about 5 times that in Comparative Example in each comparison.

Therefore, the yield of the phosphate fertilizer is much more improved by the firing of the granulated product as compared to the firing of the powder.

(ii) Hardness

The hardnesses of the phosphate fertilizers of Example 104 and Example 105 are both more than 1 kgf, specifically, 3.3 kgf and 1.9 kgf, respectively. Therefore, the phosphate fertilizers are hardly disintegrated and generate less dust, and hence are easy to handle.

(iii) Ratio of citric acid-soluble phosphate and the like

The ratio of citric acid-soluble phosphate and the ratio of hydrochloric acid-soluble silicate are 95.0% and 79.0%, respectively, in Comparative Example 51 while being 97.8% and 88.9%, respectively, in Example 104, and are 92.3% and 73.7%, respectively, in Comparative Example 52 while being 98.9% and 89.3%, respectively, in Example 105. In other words, the ratios in Example are higher in each comparison.

Therefore, the phosphate fertilizer obtained by firing the granulated product of the mixed raw material is improved in both ratio of citric acid-soluble phosphate and ratio of hydrochloric acid-soluble silicate as compared to the phosphate fertilizer obtained by firing the powder of the mixed raw material.

**Claims**

1. A phosphate fertilizer, which is obtained by firing at 1,150 to 1,350°C a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

   a point (a), where (A)/(B)/(C)=56/35/9;
   a point (b), where (A)/(B)/(C)=35/60/5;
   a point (c), where (A)/(B)/(C)=22/60/18; and
   a point (d), where (A)/(B)/(C)=36/35/29,

   wherein

   the sewage sludge-derived material comprises at least one or more kinds selected from the group consisting of: dewatered sludge; dried sludge; carbonized sludge; sewage sludge incineration ash; and sewage sludge molten slag;
   and
   the calcium source comprises at least one or more kinds selected from the group consisting of: livestock excreta; fermented livestock excreta; dried livestock excreta; carbonized livestock excreta; livestock excreta incineration ash; and livestock excreta molten slag; and
   the phosphate fertilizer has a content of CaO of 35 to 55 mass%, a molar ratio of Ca/P of 2.0 to 7.5, and a content of $Al_2O_3$ of 19 mass% or less.

2. A phosphate fertilizer according to claim 1, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 3:

a point (a), where (A)/(B)/(C)=56/35/9;
a point (b), where (A)/(B)/(C)=40/51/9;
a point (c), where (A)/(B)/(C)=29/50/21; and
a point (d), where (A)/(B)/(C)=35/40/25.

3. A phosphate fertilizer, which is obtained by firing at 1,150 to 1,350°C a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

a point (a), where (A)/(B)/(C)=56/35/9;
a point (b), where (A)/(B)/(C)=35/60/5;
a point (c), where (A)/(B)/(C)=22/60/18; and
a point (d), where (A)/(B)/(C)=36/35/29,

wherein

the sewage sludge-derived material comprises at least one or more kinds selected from the group consisting of: dewatered sludge; dried sludge; carbonized sludge; sewage sludge incineration ash; and sewage sludge molten slag;
the calcium source comprises a water-washed product of livestock excreta incineration ash; and
the phosphate fertilizer has a content of CaO of 35 to 60 mass%, a content of $SiO_2$ of 5 to 35 mass%, a content of $P_2O_5$ of 5 to 35 mass%, and a content of components except for CaO, $SiO_2$, and $P_2O_5$ of 30 mass% or less.

4. A phosphate fertilizer according to claim 1 or 3, wherein the mixed raw material further contains a silica source.

5. A phosphate fertilizer according to claim 3, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 4:

a point (a), where (A)/(B)/(C)=54/35/11;
a point (b), where (A)/(B)/(C)=35/60/5;
a point (c), where (A)/(B)/(C)=22/60/18; and
a point (d), where (A)/(B)/(C)=35/37/28.

6. A phosphate fertilizer, which is obtained by firing at 1,150 to 1,350°C a mixed raw material containing: sewage sludge and/or a sewage sludge-derived material; and a calcium source, wherein the phosphate fertilizer has a mass ratio of (A) components except for CaO and $P_2O_5$, (B) CaO, and (C) $P_2O_5$ within a range bounded by the following points in a trilinear diagram illustrated in FIG. 1:

a point (a), where (A)/(B)/(C)=56/35/9;
a point (b), where (A)/(B)/(C)=35/60/5;
a point (c), where (A)/(B)/(C)=22/60/18; and
a point (d), where (A)/(B)/(C)=36/35/29,

wherein

the sewage sludge-derived material comprises at least one or more kinds selected from the group consisting of: dewatered sludge; dried sludge; carbonized sludge; sewage sludge incineration ash; and sewage sludge molten slag;
the mixed raw material further contains a silica source;
the calcium source and the silica source each comprise ready-mixed concrete sludge; and
the phosphate fertilizer has a content of CaO of 35 to 60 mass%, a content of $SiO_2$ of 15 to 30 mass%, a content of $P_2O_5$ of 5 to 30 mass%, and a content of components except for CaO, $SiO_2$, and $P_2O_5$ of 30 mass% or less.

7. A phosphate fertilizer according to claim 6, wherein the ready-mixed concrete sludge has a molar ratio of $CaO/SiO_2$ in the ready-mixed concrete sludge of 0.7 to 3.0.

8. A phosphate fertilizer according to any one of claims 1 to 7, wherein the phosphate fertilizer has a ratio of citric acid-soluble phosphate of 60% or more and a ratio of hydrochloric acid-soluble silicate of 40% or more.

9. A production method for a phosphate fertilizer of any one of claims 1 to 8, the method comprising:

   a mixing step of mixing sewage sludge and/or a sewage sludge-derived material with a calcium source and optionally with a silica source to obtain a mixed raw material; and
   a firing step of firing the mixed raw material by using a firing furnace at 1,150 to 1,350°C to obtain the phosphate fertilizer as a fired product.

10. A production method for a phosphate fertilizer according to claim 9, wherein the mixing step comprises the step of obtaining a mixed raw material that allows the phosphate fertilizer to have a content of CaO of 35 to 60%.

11. A production method for a phosphate fertilizer according to any one of claims 9 and 10, further comprising a granulation step of, after the mixing step and before the firing step, granulating the mixed raw material to obtain a granulated product all of which passes through a sieve having a nominal opening size of 5.6 mm and 75 mass% or more of which remain on a sieve having a nominal opening size of 2 mm.

**Patentansprüche**

1. Durch Brennen eines gemischten Rohmaterials bei 1.150 bis 1.350 °C erhaltener Phosphatdünger, wobei das gemischte Rohmaterial Folgendes enthält: Klärschlamm und/oder ein von Klärschlamm abgeleitetes Material; und eine Calciumquelle, wobei der Phosphatdünger ein Massenverhältnis von (A) Komponenten außer CaO und $P_2O_5$, (B) CaO und (C) $P_2O_5$ in einem Bereich aufweist, der durch die folgenden Punkte in einem trilinearen Diagramm begrenzt ist, wie in FIG. 1 dargestellt:

   einen Punkt (a), wobei (A)/(B)/(C)=56/35/9 ist;
   einen Punkt (b), wobei (A)/(B)/(C)=35/60/5 ist;
   einen Punkt (c), wobei (A)/(B)/(C)=22/60/18 ist; und
   einen Punkt (d), wobei (A)/(B)/(C)=36/35/29 ist,

   wobei

   das von Klärschlamm abgeleitete Material mindestens einen oder mehrere Bestandteile umfasst, ausgewählt aus der Gruppe bestehend aus: entwässertem Schlamm; getrocknetem Schlamm; karbonisiertem Schlamm; Klärschlamm-Verbrennungsasche und geschmolzener Klärschlamm-Schlacke; und
   die Calciumquelle mindestens einen oder mehrere Bestandteile umfasst, ausgewählt aus der Gruppe bestehend aus: Viehexkreten; fermentierten Viehexkreten; getrockneten Viehexkreten; karbonisierten Viehexkreten; Viehexkreten-Verbrennungsasche; und geschmolzener Viehexkreten-Schlacke; und
   der Phosphatdünger einen Gehalt von CaO von 35 bis 55 Massen-%, ein molares Verhältnis Ca/P von 2,0 bis 7,5 und einen Gehalt von $Al_2O_3$ von 19 Massen-% oder weniger aufweist.

2. Phosphatdünger nach Anspruch 1, wobei der Phosphatdünger ein Massenverhältnis von (A) Komponenten außer CaO und $P_2O_5$, (B) CaO und (C) $P_2O_5$ in einem Bereich aufweist, der durch die folgenden Punkte in einem trilinearen Diagramm begrenzt ist, wie in FIG. 3 dargestellt:

   einen Punkt (a), wobei (A)/(B)/(C)=56/35/9 ist;
   einen Punkt (b), wobei (A)/(B)/(C)=40/51/9 ist;
   einen Punkt (c), wobei (A)/(B)/(C)=29/50/21 ist; und
   einen Punkt (d), wobei (A)/(B)/(C)=35/40/25 ist.

3. Durch Brennen eines gemischten Rohmaterials bei 1.150 bis 1.350 °C erhaltener Phosphatdünger, wobei das gemischte Rohmaterial Folgendes enthält: Klärschlamm und/oder ein von Klärschlamm abgeleitetes Material; und eine Calciumquelle, wobei der Phosphatdünger ein Massenverhältnis von (A) Komponenten außer CaO und $P_2O_5$, (B) CaO und (C) $P_2O_5$ in einem Bereich aufweist, der durch die folgenden Punkte in einem trilinearen Diagramm begrenzt ist, wie in FIG. 1 dargestellt:

einen Punkt (a), wobei (A)/(B)/(C)=56/35/9 ist;
einen Punkt (b), wobei (A)/(B)/(C)=35/60/5 ist;
einen Punkt (c), wobei (A)/(B)/(C)=22/60/18 ist; und
einen Punkt (d), wobei (A)/(B)/(C)=36/35/29 ist,

wobei

das von Klärschlamm abgeleitete Material mindestens einen oder mehrere Bestandteile umfasst, ausgewählt aus der Gruppe bestehend aus: entwässertem Schlamm; getrocknetem Schlamm; karbonisiertem Schlamm; Klärschlamm-Verbrennungsasche; und geschmolzener Klärschlamm-Schlacke; die Calciumquelle ein in Wasser gewaschenes Produkt von Viehexkreten-Verbrennungsasche umfasst; und der Phosphatdünger einen Gehalt von CaO von 35 bis 60 Massen-%, einen Gehalt von $SiO_2$ von 5 bis 35 Massen-%, einen Gehalt von $P_2O_5$ von 5 bis 35 Massen-% und einen Gehalt von Komponenten außer CaO, $SiO_2$ und $P_2O_5$ von 30 Massen-% oder weniger aufweist.

4. Phosphatdünger nach Anspruch 1 oder 3, wobei das gemischte Rohmaterial ferner eine Siliziumdioxidquelle enthält.

5. Phosphatdünger nach Anspruch 3, wobei der Phosphatdünger ein Massenverhältnis von (A) Komponenten außer CaO und $P_2O_5$, (B) CaO und (C) $P_2O_5$ in einem Bereich aufweist, der durch die folgenden Punkte in einem trilinearen Diagramm begrenzt ist, wie in FIG. 4 dargestellt:

einen Punkt (a), wobei (A)/(B)/(C)=54/35/11 ist;
einen Punkt (b), wobei (A)/(B)/(C)=35/60/5 ist;
einen Punkt (c), wobei (A)/(B)/(C)=22/60/18 ist; und
einen Punkt (d), wobei (A)/(B)/(C)=35/37/28 ist.

6. Durch Brennen eines gemischten Rohmaterials bei 1.150 bis 1.350 °C erhaltener Phosphatdünger, wobei das gemischte Rohmaterial Folgendes enthält: Klärschlamm und/oder ein von Klärschlamm abgeleitetes Material; und eine Calciumquelle, wobei der Phosphatdünger ein Massenverhältnis von (A) Komponenten außer CaO und $P_2O_5$, (B) CaO, und (C) $P_2O_5$ in einem Bereich aufweist, der durch die folgenden Punkte in einem trilinearen Diagramm begrenzt ist, wie in FIG. 1 dargestellt:

einen Punkt (a), wobei (A)/(B)/(C)=56/35/9 ist;
einen Punkt (b), wobei (A)/(B)/(C)=35/60/5 ist;
einen Punkt (c), wobei (A)/(B)/(C)=22/60/18 ist; und
einen Punkt (d), wobei (A)/(B)/(C)=36/35/29 ist,

wobei

das von Klärschlamm abgeleitete Material mindestens einen oder mehrere Bestandteile umfasst, ausgewählt aus der Gruppe bestehend aus: entwässertem Schlamm; getrocknetem Schlamm; karbonisiertem Schlamm; Klärschlamm-Verbrennungsasche; und geschmolzener Klärschlamm-Schlacke; das gemischte Rohmaterial ferner eine Siliziumdioxidquelle enthält; die Calciumquelle und die Siliziumdioxidquelle jeweils fertig gemischten Betonschlamm umfassen; und der Phosphatdünger einen Gehalt von CaO von 35 bis 60 Massen-%, einen Gehalt von $SiO_2$ von 15 bis 30 Massen-%, einen Gehalt von $P_2O_5$ von 5 bis 30 Massen-% und einen Gehalt von Komponenten außer CaO, $SiO_2$, und $P_2O_5$ von 30 Massen-% oder weniger aufweist.

7. Phosphatdünger nach Anspruch 6, wobei der fertig gemischte Betonschlamm ein molares Verhältnis $CaO/SiO_2$ in dem fertig gemischten Betonschlamm von 0,7 bis 3,0 aufweist.

8. Phosphatdünger nach einem der Ansprüche 1 bis 7, wobei der Phosphatdünger ein Verhältnis von in Zitronensäure löslichem Phosphat von 60 % oder mehr und ein Verhältnis von in Salzsäure löslichem Silicat von 40 % oder mehr aufweist.

9. Herstellungsverfahren für einen Phosphatdünger nach einem der Ansprüche 1 bis 8, wobei das Verfahren Folgendes umfasst:

einen Misch-Schritt, wobei Klärschlamm und/oder ein von Klärschlamm abgeleitetes Material mit einer Calciumquelle und wahlweise mit einer Siliziumdioxidquelle gemischt wird, um ein gemischtes Rohmaterial zu erhalten; und

einen Brenn-Schritt, wobei das gemischte Rohmaterial unter Verwendung eines Brennofens bei 1.150 bis 1.350 °C gebrannt wird, um den Phosphatdünger als gebranntes Produkt zu erhalten.

**10.** Herstellungsverfahren für einen Phosphatdünger nach Anspruch 9, wobei der Misch-Schritt den Schritt des Erhaltens eines gemischten Rohmaterials umfasst, das erlaubt, dass der Phosphatdünger einen Gehalt von CaO von 35 bis 60 % aufweist.

**11.** Herstellungsverfahren für einen Phosphatdünger nach einem der Ansprüche 9 und 10, ferner umfassend einen Granulierungs-Schritt, wobei nach dem Misch-Schritt und vor dem Brenn-Schritt das gemischte Rohmaterial granuliert wird, um ein granuliertes Produkt zu erhalten, von dem alles durch ein Sieb mit einer nominalen Öffnungsweite von 5,6 mm durchtritt und von dem 75 Massen-% oder mehr in einem Sieb mit einer nominalen Öffnungsweite von 2 mm verbleiben.

## Revendications

**1.** Engrais phosphaté, qui est obtenu en brûlant à 1150 à 1350 °C une matière brute mixte contenant : une boue d'épuration et/ou une matière dérivée de boue d'épuration ; et une source de calcium, l'engrais phosphaté ayant un rapport en masse de (A) composants à part pour CaO et $P_2O_5$, (B) de CaO et (C) de $P_2O_5$ dans une plage bordée par les points suivants dans un diagramme trilinéaire illustré sur la figure 1 :

un point (a), où (A) / (B) / (C) = 56/35/9 ;
un point (b), où (A) / (B) / (C) = 35/60/5 ;
un point (c), où (A) / (B) / (C) = 22/60/18 ; et
un point (d), où (A) / (B) / (C) = 36/35/29,

dans lequel

la matière dérivée de boue d'épuration comprend au moins un ou plusieurs types choisis dans le groupe constitué par : de la boue déshydratée ; de la boue séchée ; de la boue carbonisée ; des cendres d'incinération de boue d'épuration ; et du laitier en fusion de boue d'épuration ;
et
la source de calcium comprend un ou plusieurs types choisis dans le groupe constitué par : des excrétions de bétail ; des excrétions de bétail fermentées ; des excrétions de bétail séchées ; des excrétions de bétail carbonisées ; les cendres d'incinération d'excrétions de bétail ; et des laitiers en fusion d'excrétions de bétail ; et l'engrais phosphaté a une teneur de CaO de 35 à 55 % en masse, un rapport molaire de Ca/P de 2,0 à 7,5 et une teneur d'$Al_2O_3$ de 19 % en masse ou moins.

**2.** Engrais phosphaté selon la revendication 1, dans lequel l'engrais phosphaté a un rapport en masse de (A) composants à part pour CaO et $P_2O_5$, (B) de CaO et (C) de $P_2O_5$ dans une plage bordée par les points suivants dans un diagramme trilinéaire illustré sur la figure 3 :

un point (a), où (A) / (B) / (C) = 56/35/9 ;
un point (b), où (A) / (B) / (C) = 40/51/9 ;
un point (c), où (A) / (B) / (C) = 29/50/21 ; et
un point (d), où (A) / (B) / (C) = 35/40/25.

**3.** Engrais phosphaté, qui est obtenu en brûlant à 1150 à 1350 °C une matière brute mixte contenant : une boue d'épuration et/ou une matière dérivée de boue d'épuration ; et une source de calcium, l'engrais phosphaté ayant un rapport en masse de (A) composants à part pour CaO et $P_2O_5$, (B) de CaO et (C) de $P_2O_5$ dans une plage bordée par les points suivants dans un diagramme trilinéaire illustré sur la figure 1 :

un point (a), où (A) / (B) / (C) = 56/35/9 ;
un point (b), où (A) / (B) / (C) = 35/60/5 ;
un point (c), où (A) / (B) / (C) = 22/60/18 ; et

un point (d), où (A) / (B) / (C) = 36/35/29,

dans lequel

la matière dérivée de boue d'épuration comprend au moins un ou plusieurs types choisis dans le groupe constitué par : de la boue déshydratée ; de la boue séchée ; de la boue carbonisée ; des cendres d'incinération de boue d'épuration ; et un laitier en fusion de boue d'épuration ;
la source de calcium comprend un produit lavé à l'eau de cendres d'incinération d'excrétions de bétail ; et
l'engrais phosphaté a une teneur de CaO de 35 à 60 % en masse, une teneur de $SiO_2$ de 5 à 35 % en masse, une teneur de $P_2O_5$ de 5 à 35 % en masse et une teneur de composants à part pour CaO, $SiO_2$ et $P_2O_5$ de 30 % en masse ou moins.

4. Engrais phosphaté selon la revendication 1 ou 3, dans lequel la matière brute mixte contient en outre une source de silice.

5. Engrais phosphaté selon la revendication 3, dans lequel l'engrais phosphaté a un rapport en masse de (A) composants à part pour CaO et $P_2O_5$, (B) de CaO et (C) de $P_2O_5$ dans une plage bordée par les points suivants dans un diagramme trilinéaire illustré sur la figure 4 :

un point (a), où (A) / (B) / (C) = 54/35/11 ;
un point (b), où (A) / (B) / (C) = 35/60/5 ;
un point (c), où (A) / (B) / (C) = 22/60/18 ; et
un point (d), où (A) / (B) / (C) = 35/37/28.

6. Engrais phosphaté, qui est obtenu en brûlant à 1150 à 1350 °C une matière brute mixte contenant : une boue d'épuration et/ou une matière dérivée de boue d'épuration ; et une source de calcium, l'engrais phosphaté ayant un rapport en masse de (A) composants sauf pour CaO et $P_2O_5$, (B) de CaO et (C) de $P_2O_5$ dans une plage bordée par les points suivants dans un diagramme trilinéaire illustré sur la figure 1 :

un point (a), où (A) / (B) / (C) = 56/35/9 ;
un point (b), où (A) / (B) / (C) = 35/60/5 ;
un point (c), où (A) / (B) / (C) = 22/60/18 ; et
un point (d), où (A) / (B) / (C) = 36/35/29,

dans lequel

la matière dérivée de boue d'épuration comprend au moins un ou plusieurs types choisis dans le groupe constitué par : de la boue déshydratée ; de la boue séchée ; de la boue carbonisée ; des cendres d'incinératon de boue d'épuration ; et un laitier en fusion de boue d'épuration ;
la matière brute mixte contient en outre une source de silice ; la source de calcium et la source de silice comprennent chacune de la boue concrète prête à l'emploi ; et
l'engrais phosphaté a une teneur de CaO de 35 à 60 % en masse, une teneur de $SiO_2$ de 15 à 30 % en masse, une teneur de $P_2O_5$ de 5 à 30 % en masse et une teneur de composants à part pour CaO, $SiO_2$ et $P_2O_5$ de 30 % en masse ou moins.

7. Engrais phosphaté selon la revendication 6, dans lequel la boue concrète prête à l'emploi a un rapport molaire de $CaO/SiO_2$ dans la boue concrète prête à l'emploi de 0,7 à 3,0.

8. Engrais phosphaté selon l'une quelconque des revendications 1 à 7, dans lequel l'engrais phosphaté a un rapport de phosphate soluble dans l'acide citrique de 60 % ou plus et un rapport de silicate soluble dans l'acide chlorhydrique de 40 % ou plus.

9. Procédé de production pour un engrais phosphaté selon l'une quelconque des revendications 1 à 8, le procédé comprenant :

une étape de mélange de mélange de boue d'épuration et/ou de matière dérivée de boue d'épuration avec une source de calcium et éventuellement avec une source de silice pour obtenir une matière brute mixte ; et
une étape de brûlure de brûlure de la matière brute mixte en utilisant un four de brûlure à 1150 à 1350 °C pour obtenir l'engrais phosphaté comme produit brûlé.

10. Procédé de production pour un engrais phosphaté selon la revendication 9, dans lequel l'étape de mélange comprend l'étape d'obtention d'une matière brute mixte qui permet à l'engrais phosphaté d'avoir une teneur de CaO de 35 à 60 %.

11. Procédé de production pour un engrais phosphaté selon l'une quelconque des revendications 9 et 10, comprenant en outre une étape de granulation de, après l'étape de mélange et avant l'étape de brûlure, granulation de la matière brute mixte pour obtenir un produit granulé dont tout duquel passe à travers un tamis ayant une taille d'ouverture nominale de 5,6 mm et 75 % en masse ou plus de ce qui reste sur un tamis ayant une taille d'ouverture nominale de 2 mm.

FIG. 1

(A)

(B)                                    (C)

■ :POINT (a), ◆ :POINT (b), ▲ :POINT (c), ● :POINT (d)

FIG. 2

(A)

(B)                                    (C)

■ :POINT (a), ◆ :POINT (b), ▲ :POINT (c), ● :POINT (d)

FIG. 3

■ :POINT (a), ◆ :POINT (b), ▲ :POINT (c), ● :POINT (d)

FIG. 4

■ :POINT (a), ◆ :POINT (b), ▲ :POINT (c), ● :POINT (d)

FIG. 5

■ :POINT (a), ◆ :POINT (b), ▲ :POINT (c), ● :POINT (d)

**EP 2 725 001 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 9328385 A
- JP 2001080979 A
- JP 2003112988 A
- WO 2010108630 A
- EP 0000195 A
- DE 102007014906 A
- DE 2601676 A